# EUROPEAN PATENT SPECIFICATION

(11) **EP 4 377 395 B1**
(45) Date of publication and mention of the grant of the patent: **22.07.2026**
(21) Application number: 22747051.5
(22) Date of filing: 22.07.2022
(51) Int. Cl.: C08L 69/00

(54) **HYDROLYSIS-RESISTANT POLYCARBONATE COMPOSITION**
HYDROLYSEBESTÄNDIGE POLYCARBONATZUSAMMENSETZUNG
COMPOSITION DE POLYCARBONATE RÉSISTANT À L'HYDROLYSE

(30) Priority: 27.07.2021 WO PCT/CN2021/108657; 12.08.2021 EP 21191076
(43) Date of publication of application: 05.06.2024
(73) Proprietor: Covestro Deutschland AG, 51373 Leverkusen (DE)
(72) Inventor: WANG, Lei, Shanghai, 201900 (CN); WANG, Xiaoxiang, Shanghai, 200123 (CN)
(74) Representative: Levpat
(86) International application number: PCT/EP2022/070640
(87) International publication number: WO 2023/006614

(56) References cited:
- CN-A- 107 057 318
- CN-A- 108 117 732
- CN-A- 109 666 281

## Description

### TECHNICAL FIELD

The present invention relates to a hydrolysis-resistant polycarbonate (PC) composition, and a shaped article made from the same.

### BACKGROUND ART

Polycarbonate resin compositions are excellent in mechanical properties and electric characteristics such as dielectric strength, surface/volume resistance, dielectric constant, and are used generally for automobile applications as well as for electronic and electric device applications. Efforts have been made to develop polycarbonate compositions meeting the requirements for various applications.

US8927636B2 discloses a method for achieving good flame resistance, impact resistance and surface quality by incorporating a metal organic sulfonate, a fluoropolymer, specified silsesquioxane particles and a specified graft copolymer into a polycarbonate resin.

US6518357B1 discloses formulations which achieve V-0 at 1/8 inch and 1/16 inch thickness according to UL94: 2015, obtained by blending polycarbonate with 3 different siloxane additives: poly(phenyl methyl siloxane), (phenyl silsesquioxane)-co-(dimethyl siloxane), and poly(phenyl vinyl silsesquioxane).

JP4890766 B2 discloses a light diffusing aromatic polycarbonate resin composition, in which special polyorganosilsesquioxane particles, weight loss thereof at 400-500 °C is 1 percent in (TGA) thermal gravimetric conforming to (B) JIS K7120, was used as light diffusing agent and added into polycarbonate. The light-diffusing aromatic polycarbonate resin composition exhibits high brightness when used in the direct type backlight light diffusion plate.

CN 108117732 A relates to flame-retardant thermoplastic compositions comprising 60 % to 90 % by weight polycarbonate, 3 % to 20 % by weight graft polymer, and 5 % to 22 % by weight of a flame-retardant package that includes an organophosphorus compound, an organosilicon component, and a flame-retardant synergist.The flame-retardant synergist consists of PTFE and an acid-binding additive, preferably selected from a group of inorganic oxides. V0 classifications are achieved at a thickness of 1.5 mm. It is also unclear whether the V0 classification is intended to be a characteristic that must be attained by all compositions as defined in the document.

CN 109666281 A discloses a high-transparent film using a halogen-free flame-retardant, heat-mouldable polycarbonate material, which is prepared from a raw material comprising the following parts by weight: 70-88 parts of polycarbonate resin, 0.5-2 parts of copolymer, 8-16 parts of phosphorus-containing flame retardant, 0.1-1 part of silicon-containing flame retardant which can be a polysilsesquioxane, 0-2 parts of filler which can be talc or kaolin, and 0.1-0.8 parts of anti-dripping agent.

There are many requirements on the plastic housing materials for outdoor applications when facing the harsh conditions such as extreme high or low temperature, high humidity, and fire risk etc. For electronic and electronic device (EE&A) outdoor applications, it requires plastic housing materials having good flame retardancy and excellent hydrolysis resistance. Excellent hydrolysis resistance certification requires the material to keep its flame-retardant performance unchanged after 7 days immersion in hot water of 70°C.

However, commercially available flame-retardant polycarbonate composition with V-0 performance cannot achieve V-0 performance after 7 days immersion in hot water of 70 °C according to UL94: 2015 and hence are not ideal for outdoor application.

Therefore, there is still a need for a polycarbonate composition with a V-0 performance according to UL94: 2015 having a good hydrolysis resistance, expressed in that an article with a thickness of 1.0 mm prepared therefrom can also achieve V-0 performance after 7 days immersion in hot water of 70°C.

### SUMMARY OF THE INVENTION

One object of the present application is thus to provide a polycarbonate composition which has a good combination of hydrolysis resistance and flame retardancy, an article with a thickness of 1.0 mm prepared therefrom can achieve V-0 performance before and after 7 days immersion in hot water of 70°C.

According to the present invention, the hydrolysis resistance of a composition is good when the article with a thickness of 1.0 mm prepared therefrom achieves V-0 performance before and after 7 days immersion in hot water of 70 °C.

A first aspect of the present invention is to provide a polycarbonate composition comprising the following components, relative to the total weight of the composition:
A) 50-95 wt.% of an aromatic polycarbonate;
B) 1-20 wt.% of a phosphorus-containing flame retardant;
C) 0.3-0.7 wt.% of an anti-dripping agent;
D) 0.1-6 wt.% of a hydrolysis stabilizer; and
E) 1.5-9 wt.% of a polysilsesquioxane,
wherein the hydrolysis stabilizer is selected from mineral clays, organic acids, and a combination thereof.

A second aspect of the present invention is to provide a shaped article made from a polycarbonate composition according to the first aspect the present invention.

A third aspect of the present invention is to provide a process for preparing the shaped article according to the second aspect the present invention, comprising injection moulding, extrusion moulding, blow moulding or thermoforming the polycarbonate composition according to the first aspect of the present invention.

The polycarbonate composition according to the present invention has a good combination of hydrolysis resistance and flame retardancy.

The polycarbonate composition according to the present invention achieves a V-0 classification even with a low thickness, such as 1.0 mm, after 7 days immersion in water at 70 °C, as measured in accordance with UL94:2015.

Other subjects and characteristics, aspects and advantages of the present invention will emerge even more clearly on reading the description and the examples that follow.

### DETAILED DESCRIPTION OF THE INVENTION

In that which follows and unless otherwise indicated, the limits of a range of values are included within this range, in particular in the expressions "between...and..." and "from ... to ...".

Throughout the present application, the term "comprising" is to be interpreted as encompassing all specifically mentioned features as well as optional, additional, unspecified ones.

Unless defined otherwise, all technical and scientific terms used herein have the same meaning as commonly understood by one of ordinary skill in the art to which the present invention pertains. When the definition of a term in the present description conflicts with the meaning as commonly understood by those skilled in the art the present invention belongs to, the definition described herein shall apply.

Unless otherwise specified, all numerical values expressing amount of ingredients and the like which are used in the description and claims are to be understood as being modified by the term "about".

### Component A

The polycarbonate compositions according to the present invention comprise aromatic polycarbonate as component A. The aromatic polycarbonate can be a mixture of one or more aromatic polycarbonates.

According to the invention, "aromatic polycarbonates" or else just "polycarbonates" is to be understood as meaning both homopolycarbonates and copolycarbonates, in particular aromatic ones. These polycarbonates may be linear or branched in known fashion. According to the invention, mixtures of polycarbonates may also be used.

A "polycarbonate material" or a material "based on polycarbonate" is a thermoplastic material preferably comprising at least 50 wt.% polycarbonate, more preferably at least 60 wt.% polycarbonate, even more preferably at least 65 wt.% polycarbonate.

A portion, preferably up to 80 mol%, more preferably of 20 mol% to 50 mol%, of the carbonate groups in the polycarbonates used in accordance with the invention may have been replaced by aromatic dicarboxylic ester groups. Polycarbonates of this type that incorporate not only acid radicals derived from carbonic acid but also acid radicals derived from aromatic dicarboxylic acids in the molecular chain are referred to as aromatic polyester carbonates. For the purposes of the present invention, they are covered by the umbrella term "thermoplastic aromatic polycarbonates".

Replacement of the carbonate groups by the aromatic dicarboxylic ester groups proceeds essentially stoichiometrically and also quantitatively and the molar ratio of the reaction partners is therefore also reflected in the final polyester carbonate. The aromatic dicarboxylic ester groups can be incorporated either randomly or blockwise.

Aromatic polycarbonates selected in accordance with the invention preferably have weight-average molecular weights M_{w} of 15 000 to 40 000 g/mol, more preferably of 16 000 to 34 000 g/mol, even more preferably of 17 000 to 33 000 g/mol, most preferably of 19 000 to 32 000 g/mol. The values for M_{w} here are determined by a gel permeation chromatography, calibrated against bisphenol A polycarbonate standards using dichloromethane as eluent, calibration with linear polycarbonates (made of bisphenol A and phosgene) of known molar mass distribution from PSS Polymer Standards Service GmbH, Germany; calibration according to method 2301-0257502-09D (2009 Edition in German) from Currenta GmbH & Co. OHG, Leverkusen. The eluent is dichloromethane. Column combination of crosslinked styrene-divinylbenzene resins. Diameter of analytical columns: 7.5 mm; length: 300 mm. Particle sizes of column material: 3 µm to 20 µm. Concentration of solutions: 0.2% by weight. Flow rate: 1.0 ml/min, temperature of solutions: 30°C. Detection using a refractive index (RI) detector.

The polycarbonates are preferably produced by the interfacial process or the melt transesterification process, which have been described many times in the literature.

With regard to the interfacial process reference is made for example to H. Schnell, "Chemistry and Physics of Polycarbonates", Polymer Reviews, Vol. 9, Interscience Publishers, New York 1964 p. 33 et seq., to Polymer Reviews, Vol. 10, "Condensation Polymers by Interfacial and Solution Methods", Paul W. Morgan, Interscience Publishers, New York 1965, Chapt. VIII, p. 325, to Dres. U. Grigo, K. Kircher and P. R- Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pp. 118-145 and also to EP 0 517 044 A1.

The melt transesterification process is described, for example, in the "Encyclopedia of Polymer Science", Vol. 10 (1969), Chemistry and Physics of Polycarbonates, Polymer Reviews, H. Schnell, Vol. 9, John Wiley and Sons, Inc. (1964), and in patent specifications DE 10 31 512 A and US 6,228,973 B1.

Particulars pertaining to the production of polycarbonates are disclosed in many patent documents spanning approximately the last 40 years. Reference may be made here by way of example to Schnell, "Chemistry and Physics of Polycarbonates", Polymer Reviews, Volume 9, Interscience Publishers, New York, London, Sydney 1964, to D. Freitag, U. Grigo, P.R. Müller, H. Nouvertné, BAYER AG, "Polycarbonates" in Encyclopedia of Polymer Science and Engineering, Volume 11, Second Edition, 1988, pages 648-718, and finally to U. Grigo, K. Kirchner and P.R. Müller "Polycarbonate" in Becker/Braun, Kunststoff-Handbuch, Volume 3/1, Polycarbonate, Polyacetale, Polyester, Celluloseester, Carl Hanser Verlag Munich, Vienna 1992, pages 117-299.

The production of aromatic polycarbonates is effected for example by reaction of dihydroxyaryl compounds with carbonic halides, preferably phosgene, and/or with aromatic dicarboxyl dihalides, preferably benzenedicarboxyl dihalides, by the interfacial process, optionally using chain terminators and optionally using trifunctional or more than trifunctional branching agents, production of the polyester carbonates being achieved by replacing a portion of the carbonic acid derivatives with aromatic dicarboxylic acids or derivatives of the dicarboxylic acids, specifically with aromatic dicarboxylic ester structural units according to the carbonate structural units to be replaced in the aromatic polycarbonates. Preparation via a melt polymerization process by reaction of dihydroxyaryl compounds with, for example, diphenyl carbonate is likewise possible.

Dihydroxyaryl compounds suitable for the production of polycarbonates are for example hydroquinone, resorcinol, dihydroxydiphenyls, bis(hydroxyphenyl)alkanes, bis(hydroxyphenyl)cycloalkanes, bis(hydroxyphenyl) sulfides, bis(hydroxyphenyl) ethers, bis(hydroxyphenyl) ketones, bis(hydroxyphenyl) sulfones, bis(hydroxyphenyl) sulfoxides, α,α'-bis(hydroxyphenyl)diisopropylbenzenes, phthalimidines derived from derivatives of isatin or phenolphthalein and the ring-alkylated, ring-arylated and ring-halogenated compounds thereof.

Preferred dihydroxyaryl compounds are 4,4'-dihydroxydiphenyl, 2,2-bis(4-hydroxyphenyl)propane (bisphenol A), 2,4-bis(4-hydroxyphenyl)-2-methylbutane, 1,1-bis(4-hydroxyphenyl)-p-diisopropylbenzene, 2,2-bis(3-methyl-4-hydroxyphenyl)propane, dimethylbisphenol A, bis(3,5-dimethyl-4-hydroxyphenyl)methane, 2,2-bis(3,5-dimethyl-4-hydroxyphenyl)propane, bis(3,5-dimethyl-4-hydroxyphenyl)sulfone, 2,4-bis(3,5-dimethyl-4-hydroxyphenyl)-2-methylbutane, 1,1-bis(3,5-dimethyl-4-hydroxyphenyl)-p-diisopropylbenzene and 1,1-bis(4-hydroxyphenyl)-3,3,5-trimethylcyclohexane and also the bisphenols (I) to (III) 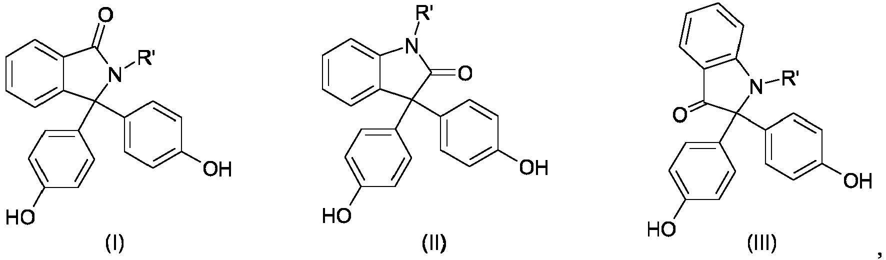 in which R' in each case stands for C₁- to C₄-alkyl, aralkyl or aryl, preferably for methyl or phenyl, very particularly preferably for methyl.

Particularly preferred dihydroxyaryl compounds are 2,2-bis(4-hydroxyphenyl)propane (bisphenol A), 2,2-bis(3,5-dimethyl-4-hydroxyphenyl)propane, 1,1-bis(4-hydroxyphenyl)cyclohexane, 1,1-bis(4-hydroxyphenyl)-3,3,5-trimethylcyclohexane, 4,4'-dihydroxybiphenyl, and dimethylbisphenol A and also the diphenols of formulae (I), (II) and (III).

These and other suitable dihydroxyaryl compounds are described for example in US 3 028 635 A, US 2 999 825 A, US 3 148 172 A, US 2 991 273 A, US 3 271 367 A, US 4 982 014 A und US 2 999 846 A, in DE 1 570 703 A, DE 2063 050 A, DE 2 036 052 A, DE 2 211 956 A and US 2 999 846 A, in DE 1 570 703 A, DE 2063 050 A, DE 2 036 052 A, DE 2 211 956 A and DE 3 832 396 A, in FR 1 561 518, in the monograph "H. Schnell, Chemistry and Physics of Polycarbonates, Interscience Publishers, New York 1964" and also in JP 62039/1986 A, JP 62040/1986 A and JP 105550/1986 A.

In the case of homopolycarbonates only one dihydroxyaryl compound is used; in the case of copolycarbonates two or more dihydroxyaryl compounds are used. The dihydroxyaryl compounds employed, similarly to all other chemicals and assistants added to the synthesis, may be contaminated with the contaminants from their own synthesis, handling and storage. However, it is desirable to use raw materials of the highest possible purity.

Suitable carbonic acid derivatives are for example phosgene and diphenyl carbonate.

Suitable chain terminators that may be used in the production of polycarbonates are monophenols. Suitable monophenols are for example phenol itself, alkylphenols such as cresols, p-tert-butylphenol, cumylphenol and mixtures thereof.

Preferred chain terminators are the phenols mono- or polysubstituted by linear or branched C₁- to C₃₀-alkyl radicals, preferably unsubstituted or substituted by tert-butyl. Particularly preferred chain terminators are phenol, cumylphenol and/or p-tert-butylphenol.

The amount of chain terminator to be employed is preferably 0.1 to 5 mol% based on the moles of diphenols employed in each case. The addition of the chain terminators may be effected before, during or after the reaction with a carbonic acid derivative.

Suitable branching agents are the trifunctional or more than trifunctional compounds familiar in polycarbonate chemistry, in particular those having three or more than three phenolic OH groups. Suitable branching agents are for example 1,3,5-tri(4-hydroxyphenyl)benzene, 1,1,1-tri(4-hydroxyphenyl)ethane, tri(4-hydroxyphenyl)phenylmethane, 2,4-bis(4-hydroxyphenylisopropyl)phenol, 2,6-bis(2-hydroxy-5'-methylbenzyl)-4-methylphenol, 2-(4-hydroxyphenyl)-2-(2,4-dihydroxyphenyl)propane, tetra(4-hydroxyphenyl)methane, tetra(4-(4-hydroxyphenylisopropyl)phenoxy)methane and 1,4-bis((4',4"-dihydroxytriphenyl)methyl)benzene and 3,3-bis(3-methyl-4-hydroxyphenyl)-2-oxo-2,3-dihydroindole.The amount of the branching agents for optional employment is preferably 0.05 mol% to 2.00 mol%, based on moles of dihydroxyaryl compounds used in each case. The branching agents may be either initially charged together with the dihydroxyaryl compounds and the chain terminators in the aqueous alkaline phase or added dissolved in an organic solvent before the phosgenation. In the case of the transesterification process the branching agents are employed together with the dihydroxyaryl compounds.

Particularly preferred polycarbonates are the homopolycarbonate based on bisphenol A, the homopolycarbonate based on 1,1-bis(4-hydroxyphenyl)-3,3,5-trimethylcyclohexane, 4,4'-dihydroxybiphenyl, and the copolycarbonates based on the two monomers bisphenol A and 1,1-bis(4-hydroxyphenyl)-3,3,5-trimethylcyclohexane and also homo- or copolycarbonates derived from the diphenols of formulae (I), (II) and (III) 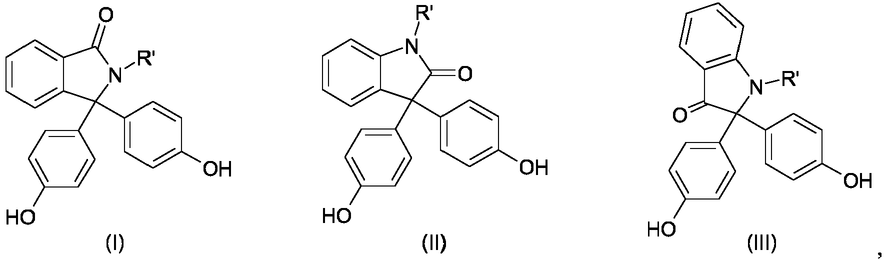 in which R' in each case stands for C₁- to C₄-alkyl, aralkyl or aryl, preferably for methyl or phenyl, very particularly preferably for methyl.

Preferred are also polycarbonates for the production of which dihydroxyaryl compounds of the following formula (1a) have been used: 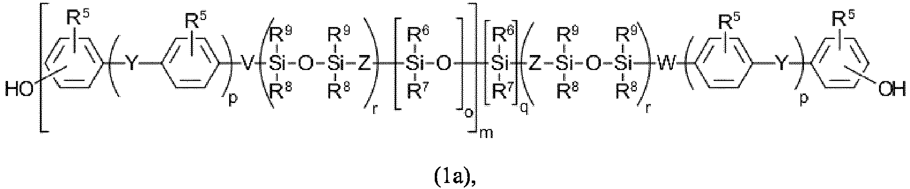 wherein
R⁵ stands for hydrogen or C₁- to C₄-alkyl, C₁- to C₄-alkoxy, preferably for hydrogen or methyl or methoxy particularly preferably for hydrogen,
R⁶, R⁷, R⁸ and R⁹ mutually independently stand for C₆- to C₁₂-aryl or C₁- to C₄-alkyl, preferably phenyl or methyl, in particular for methyl,
Y stands for a single bond, SO₂-, -S-, -CO-, -O-, C₁- to C₆-alkylene, C₂- to C₅-alkylidene, C₆- to C₁₂-arylene, which can optionally be condensed with further aromatic rings containing hetero atoms, or for a C₅- to C₆-cycloalkylidene residue, which can be singly or multiply substituted with C₁- to C₄-alkyl, preferably for a single bond, -O-, isopropylidene or for a C₅-to C₆-cycloalkylidene residue, which can be singly or multiply substituted with C₁- to C₄-alkyl,
V stands for oxygen, C₂- to C₆-alkylene or C₃- to C₆-alkylidene, preferably for oxygen or C₃-alkylene,
p, q and r mutually independently each stand 0 or 1,
if q = 0, W is a single bond, if q = 1 and r = 0 is, W stands for -O-, C₂- to C₆-alkylene or C₃- to C₆-alkylidene, preferably for -O- or C₃-alkylene,
if q = 1 and r = 1, W and V mutually independently stand for C₂- to C₆-alkylene or C₃- to C₆-alkylidene, preferably for C₃ alkylene,
Z stands for C₁- to C₆-alkylene, preferably C₂-alkylene,
o stands for an average number of repeating units from 10 to 500, preferably 10 to 100 and
m stands for an average number of repeating units from 1 to 10, preferably 1 to 6, particularly preferably 1.5 to 5.

It is also possible to use dihydroxyaryl compounds, in which two or more siloxane blocks of general formula (1a) are linked via terephthalic acid and/or isophthalic acid under formation of ester groups.

Especially preferable are (poly)siloxanes of the formulae (2) and (3) 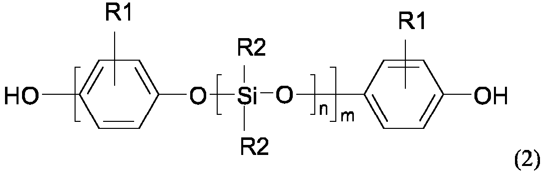 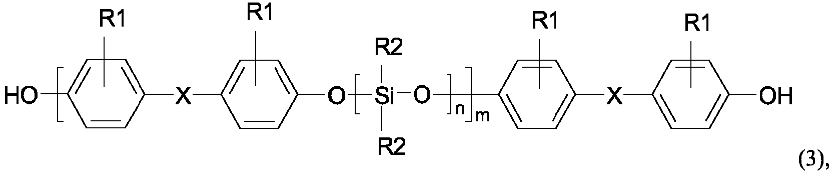
wherein R¹ stands for hydrogen, C₁- to C₄-alkyl, preferably for hydrogen or methyl and especially preferably for hydrogen,
R² mutually independently stand for aryl or alkyl, preferably for methyl,
X stands for a single bond, -SO₂-, -CO-, -O-, -S-, C₁- to C₆-alkylene, C₂- to C₅-alkylidene or for C₆- to C₁₂-arylene, which can optionally be condensed with further aromatic rings containing hetero atoms,
X stands for a single bond, -SO₂-, -CO-, -O-, -S-, C₁- to C₆-alkylene, C₂- to C₅-alkylidene, C₅- to C₁₂-cycloalkylidene or for C₆- to C₁₂-arylene, which can optionally be condensed with further aromatic rings containing hetero atoms,
X preferably stands for a single bond, isopropylidene, C₅- to C₁₂-cycloalkylidene or oxygen, and especially preferably stands for isopropylidene,
n means an average number from 10 to 400, preferably 10 and 100, especially preferably 15 to 50 and
m stands for an average number from 1 to 10, preferably 1 to 6 and especially preferably from 1.5 to 5.

Also preferably the siloxane block can be derived from one of the following structures: 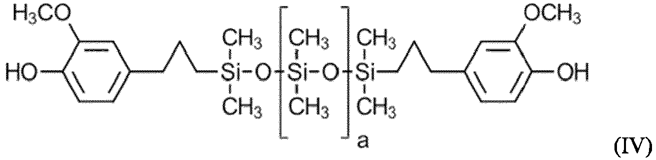 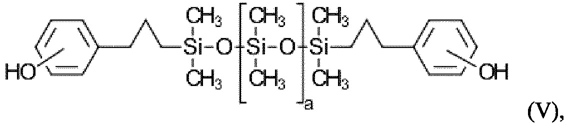 preferably (Va) 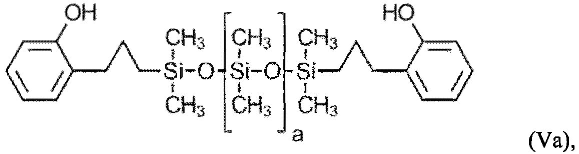 or 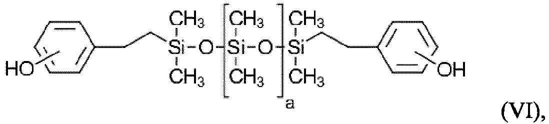 wherein a in formulae (IV), (V) und (VI) means an average number from 10 to 400, preferably from 10 to 100 and especially preferably from 15 to 50.

It is equally preferable, that at least two of the same or different siloxane blocks of the general formulae (IV), (V) or (VI) are linked via terephthalic acid and/isophthalic acid under formation of ester groups.

It is also preferable, if p = 0 in formula (1a), V stands for C₃-alkylene,
if r = 1, Z stands for C₂-alkylene, R⁸ and R⁹ stand for methyl,
if q = 1, W stands for C₃-alkylene,
if m = 1, R⁵ stands for hydrogen or C₁- to C₄-alkyl, preferably for hydrogen or methyl, R⁶ and R⁷ mutually independently stand for C₁- to C₄-alkyl, preferably methyl, and o stands for 10 to 500.

Copolycarbonates with monomer units of the general formula (1a), in particular with bisphenol A, and in particular the production of those copolycarbonates are described in WO 2015/052106 A2.

As examples of aromatic polycarbonate suitable for the present invention, mention can be made of those produced from bisphenol A and phosgene, and sold under the trade name Makrolon^{®} 2400, Makrolon^{®} 2600, Makrolon^{®} 2800, Makrolon^{®} 3100 by Covestro Co., Ltd.

Advantageously, the aromatic polycarbonate is present in the polycarbonate composition in an amount ranging from 50 wt.% to 95 wt.%, preferably 55 wt.% to 95 wt.%, more preferably 60 wt.% to 95 wt.%, relative to the total weight of the composition.

### Component B

The polycarbonate compositions according to the present invention comprise a phosphorus-containing flame retardant as component B.

The phosphorus-containing flame retardant is preferably selected from monomeric and oligomeric phosphoric and phosphonic acid esters, phosphonate amines and phosphazenes, and a combination thereof.

Preferred monomeric and oligomeric phosphoric and phosphonic acid esters are phosphorus compounds of the general formula (VII) 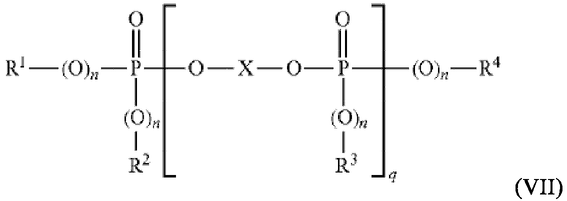 wherein
R¹, R², R³ and R⁴, independently of one another, each denote C₁-C₈ alkyl, C₅-C₆ cycloalkyl, C₆-C₂₀ aryl or C₇-C₁₂ aralkyl each optionally alkyl-substituted, preferably C₁-C₄ alkyl-substituted,
n independently of one another, denotes 0 or 1,
q denotes 0 to 30, and
X denotes a mononuclear or polynuclear aromatic residue with 6 to 30 carbon atoms or a linear or branched aliphatic residue with 2 to 30 carbon atoms, which can be OH-substituted and can contain up to eight ether bonds.

Preferably, R¹, R², R³ and R⁴, independently of one another, denote C₁-C₄ alkyl, phenyl, naphthyl or phenyl C₁-C₄ alkyl. The aromatic groups R¹, R², R³ and R⁴ can themselves be substituted with alkyl groups, preferably C₁-C₄ alkyl. Particularly preferred aryl residues are cresyl, phenyl, xylenyl, propylphenyl or butylphenyl.

Preferably, X in formula (VII) is a mononuclear or polynuclear aromatic residue with 6 to 30 carbon atoms.

n in formula (VII) can, independently of one another, be 0 or 1; n is preferably equal to 1.

q denotes integer from 0 to 30, preferably 0 to 20, particularly preferably 0 to 10, and in the case of mixtures average values from 0.8 to 5.0, preferably 1.0 to 3.0, more preferably 1.05 to 2.00, and particularly preferably from 1.08 to 1.60.

X, in particular, is derived from resorcinol, hydroquinone, bisphenol A or diphenylphenol. Particularly preferably, X is derived from bisphenol A.

Phosphorus compounds of formula (VII) are in particular tributyl phosphate, triphenyl phosphate (TPP), tricresyl phosphate, diphenyl cresyl phosphate, diphenyl octyl phosphate, diphenyl 2-ethylcresyl phosphate, tri(isopropylphenyl)phosphate, resorcinol bridged oligophosphates (e.g. resorcinol bis(diphenyl phosphate) (RDP)), and bisphenol A bridged oligophosphates (e.g. bisphenol A bis(diphenyl phosphate (BDP)). The use of oligomeric phosphoric acid esters of formula (VIII) derived from bisphenol A, for example bisphenol A bis(diphenyl phosphate (BDP) and/or resorcinol bis(diphenyl phosphate) (RDP), is particularly preferred.

Most preferred as component B is bisphenol A based oligophosphate according to formula (VIII).

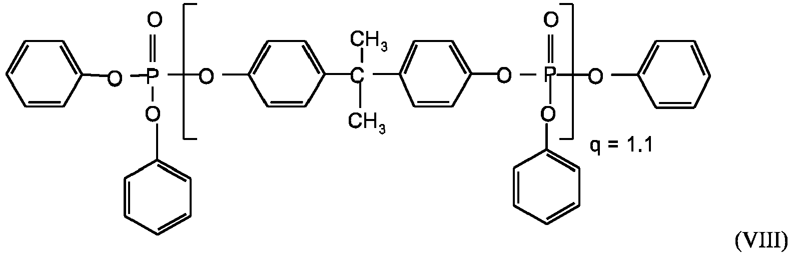

Preferred phosphazenes are cyclic phosphazenes of formula (IX): 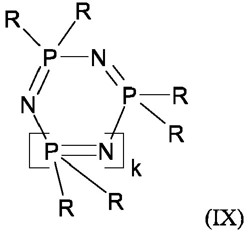 wherein
k is an integer from 1 to 10, preferably a number from 1 to 8 and particularly preferably 1 to 5
and wherein
R are in each case identical or different and are
   - an amine radical,
   - C₁-C₈ alkyl in each case optionally halogenated, preferably with fluorine and more preferably monohalogenated, preferably methyl, ethyl, propyl or butyl,
   - C₁-C₈ alkoxy, preferably methoxy, ethoxy, propoxy or butoxy,
   - C₅-C₆ cycloalkyl in each case optionally substituted by alkyl, preferably C₁-C₄ alkyl, and/or halogen, preferably chlorine and/or bromine,
   - C₆-C₂₀ aryloxy in each case optionally substituted by alkyl, preferably C₁-C₄ alkyl, and/or halogen, preferably chlorine or bromine, and/or hydroxyl, preferably phenoxy or naphthyloxy,
   - C₇-C₁₂ aralkyl in each case optionally substituted by alkyl, preferably C₁-C₄ alkyl, and/or halogen, preferably chlorine and/or bromine, preferably phenyl-C₁-C₄ alkyl, or
   - a halogen radical, preferably chlorine or fluorine, or
   - an OH radical.

The phosphazenes and their preparation are described e.g. in EP-A 728 811, DE-A 1 961 668 and WO 97/40092.

The following are particularly preferred: propoxyphosphazene, phenoxyphosphazene, methylphenoxyphosphazene, aminophosphazene and fluoroalkylphosphazenes, as well as phosphazenes of the following structures:

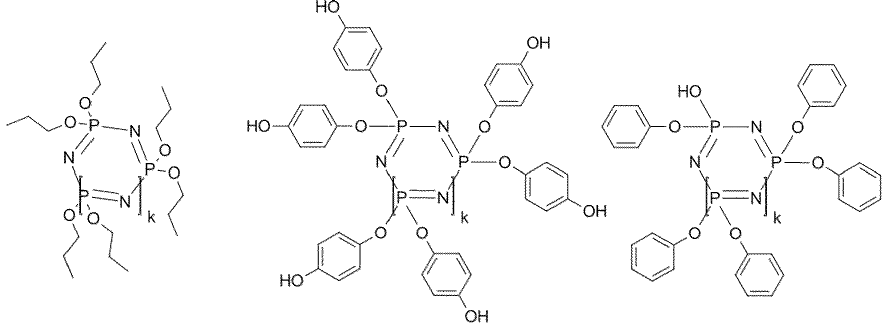

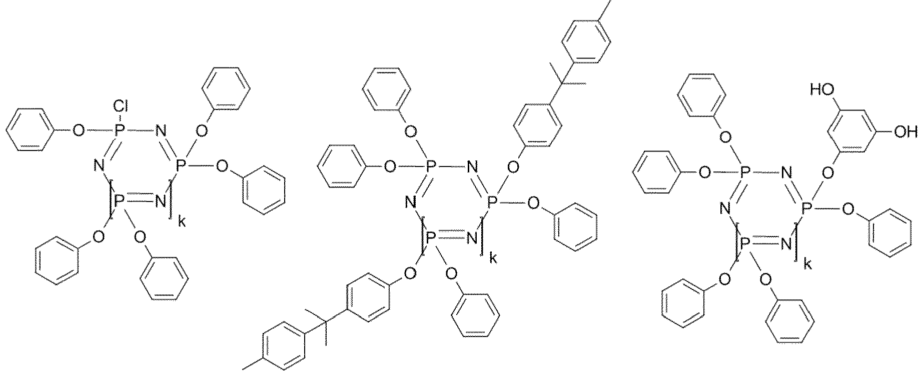

In the compounds shown above, k = 1, 2 or 3.

Preferably, the trimer content (k = 1) is from 60 to 100 mol%, preferably from 80 to 100 mol%, based on the cyclic phosphazene.

In the case where the phosphazene of formula (IX) is halogen-substituted on the phosphorus, e.g. from incompletely reacted starting material, the proportion of this phosphazene halogen-substituted on the phosphorus is preferably less than 1000 ppm, more preferably less than 500 ppm.

The phosphazenes can be used on their own or as a mixture, i.e. the radicals R can be identical or 2 or more radicals in formula (IX) can be different. Preferably, the radicals R of a phosphazene are identical.

In a more preferred embodiment, only phosphazenes with identical R are used.

Preferably, all R = phenoxy.

The most preferred compound is phenoxyphosphazene of formula (X) (all R = phenoxy).

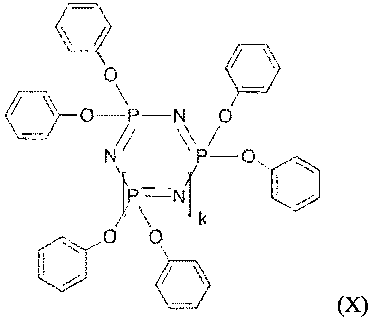

The oligomer compositions of the phosphazenes in the respective blend samples can also be detected and quantified, after compounding, by ³¹P-NMR (chemical shift; δ trimer: 6.5 to 10.0 ppm; δ tetramer: -10 to -13.5 ppm; δ higher oligomers: -16.5 to -25.0 ppm).

The phosphorus compounds according to component B are known (cf. e.g. EP-A 0 363 608, EP-A 0 640 655) or can be prepared by known methods in an analogous manner (e.g. Ullmanns Enzyklopadie der technischen Chemie, vol. 18, pp. 301 ff. 1979; Houben-Weyl, Methoden der organischen Chemie, vol. 12/1, p. 43; Beilstein vol. 6, p. 177).

As component B according to the invention, it is also possible to use mixtures of phosphates with different chemical structures and/or with the same chemical structure and different molecular weights.

Advantageously, the phosphorus-containing flame retardant is present in the ploymer composition in amount ranging from 1 wt.% to 20 wt.%, preferably 2 wt.% to 15 wt.%, relative to the total weight of the composition.

Preferably, the composition according to the present invention comprises bisphenol A bis(diphenyl phosphate (BDP) in amount ranging from 5 wt.% to 15 wt.%, relative to the total weight of the composition.

Preferably, the composition according to the present invention comprises phenoxyphosphazene in amount ranging from 1.5 wt.% to 8 wt.%, relative to the total weight of the composition.

### Component C

The polycarbonate compositions according to the present invention comprise at least one anti-dripping agent as component C.

Preferably, the at least one anti-dripping agent used is selected from fluorinated polyolefins.

The fluorinated polyolefins are known (see "Vinyl and Related Polymers" by Schildknecht, John Wiley &Sons, Inc., New York, 1962, pages 484-494; "Fluoropolymers" by Wall, Wiley-Interscience, John Wiley &Sons, Inc., New York, Volume 13, 1970, pages 623-654; "Modern Plastics Encyclopedia" , 1970-1971, Volume 47, No. 10 A, October 1970, McGraw-Hill, Inc., New York, pages 134 and 774; "Modern Plastics Encyclopaedia" , 1975-1976, October 1975, Volume 52, No. 10 A, McGraw-Hill, Inc., New York, pages 27, 28 and 472 and US-PS 3 671 487, 3 723 373 and 3 838 092) .

Preferably, the anti-dripping agent is selected from polytetrafluoroethylene, polyvinylidene fluoride, tetrafluoroethylene/hexafluoropropylene copolymer, ethylene/tetrafluoroethylene copolymer, and a combination thereof.

More preferably, polytetrafluoroethylene (PTFE) is used as anti-dripping agent.

Polytetrafluoroethylene can be prepared by known processes, for example by polymerization of tetrafluoroethylene in an aqueous medium with a free radical-forming catalyst, for example sodium, potassium or ammonium peroxodisulfate, at pressures of from 7 to 71 kg/cm² and at temperatures of from 0 to 200 °C, preferably at temperatures of from 20 to 100 °C, for further details see e.g. US patent application 2 393 967 A.

Preferably, the fluorinated polyolefins have glass transition temperatures of over -30 °C, generally over 100 °C, fluorine contents of preferably from 65 to 76 wt. %, in particular from 70 to 76 wt. % (with the fluorinated polyolefins as 100 wt. %), mean particle diameters d₅₀ of from 0.05 to 1,000 µm, preferably from 0.08 to 20 µm.

For the purpose of the present invention, the d₅₀ average value of the particle size indicates a particle size, such that 50 wt.% of the relevant material has a larger particle size and 50 wt.% of the relevant material have a smaller particle size.

The d₅₀ average size of the particles in the composition of the present invention can be determined via a method known to the person skilled in the art, for example the d₅₀ value of the PTFE polymer particle size is measured via light scattering techniques (dynamic or laser) using the respective equipment, for example available from the companies Malvern (e.g. Mastersizer^{®} Micro or 3000) or Coulter (e.g. LS 230^{®}), as notably described in the method ISO 13320-1, in EP 1279694 A and in WO 2014/037375. Laser light scattering, based on the light diffraction on the particles, is a suitable technique that can be applied to this kind of powder for determining particle size distribution. In particular the analysis can be performed on dry powder (for instance using a Coulter LS 13320^{®} instrument) or on the powder suspended into a water solution of apposite dispersant (a suitable apparatus is Coulter LS 230^{®}).

Preferably, the fluorinated polyolefins have a density of from 1.2 to 2.3 g/cm³, as measured according to the ASTM D1895: 2017.

More preferably, the fluorinated polyolefins used according to the invention have mean particle diameters of from 0.05 to 20 µm, preferably from 0.08 to 10 µm, and density of from 1.2 to 1.9 g/cm³.

Suitable fluorinated polyolefins which can be used in powder form are tetrafluoroethylene polymers having mean particle diameters of from 100 to 1000 µm and densities of from 2.0 g/cm ³ to 2.3 g/cm³.

As an example of commercial products of polytetrafluoroethylene, mention can be made to those sold under the trade name Teflon^{®} by DuPont.

A master batch of polytetrafluoroethylene and styrene-acrylonitrile (SAN) in a weight ratio of 1:1, for example, ADS 5000 available from Chemical Innovation Co., Ltd., and POLYB FS-200 available from Han Nanotech Co., Ltd, can also be used.

Advantageously, the anti-dripping agent is present in the polycarbonate composition according to the present invention in an amount ranging from 0.3 wt.% to 0.7 wt.%, preferably 0.4 wt.% to 0.6 wt.%, relative to the total weight of the composition.

### Component D

The polycarbonate compositions according to the present invention comprises at least one hydrolysis stabilizer as component D.

The hydrolysis stabilizers commonly used in polycarbonate compositions can be used in the polycarbonate composition according to the present invention.

For the purpose of the present invention, the hydrolysis stabilizer is selected from mineral clays, organic acids, and a combination thereof.

As examples of mineral clays, mention can be made of boehmite, gibbsite, diaspore, kaolin (e.g., kaolinite, pyrophyllite), smectite (e.g. montmorillonite, nontronite, saponite), talc, etc.

As examples of organic acids, mention can be made of citric acid, phosphoric acid and metaphosphoric acid, etc.

Preferably, the hydrolysis stabilizer is selected from boehmite, kaolin, talc, citric acid, and a combination thereof.

As commercial products for hydrolysis stabilizers, mention can be made to Boehmite sold under the trade name Pural^{®} 200 by Sasol Germany GmbH, kaolin sold under the trade name Polyfil HG90 by KaMin LLC, talc sold under the trade name HTP^{®} Ultra 5C by IMIFABI SPA, citric acid sold under the trade name Citric Acid Anhydrous by Weifang Ensign Industry Co., Ltd.

Advantageously, the hydrolysis stabilizer is present in the polymer composition in amount ranging from 0.1 wt.% to 6 wt.%, preferably 0.2 wt.% to 3 wt.%, relative to the total weight of the composition.

If the hydrolysis stabilizer is boehmite, it is preferably present in the polycarbonate composition according to the present invention in an amount ranging from 0.2 wt.% to 1 wt.%, preferably from 0.4 wt.% to 0.8 wt.%, relative to the total weight of the composition.

If the hydrolysis stabilizer is citric acid, it is preferably present in the polycarbonate composition according to the present invention in an amount ranging from 0.1 wt.% to 0.5 wt.%, relative to the total weight of the composition.

If the hydrolysis stabilizer is kaolin, it is preferably present in the polycarbonate composition according to the present invention in an amount ranging from 0.5 wt.% to 4 wt.%, preferably from 1 wt.% to 2 wt.%, relative to the total weight of the composition.

If the hydrolysis stabilizer is talc, it is preferably present in the polycarbonate composition according to the present invention in an amount ranging from 0.8 wt.% to 6 wt.%, preferably from 1.5 wt.% to 3 wt.%, relative to the total weight of the composition.

### Component E

The polycarbonate compositions according to the present invention comprise at least one polysilsesquioxane as component E.

The polysilsesquioxane, as used herein, has a trifunctional siloxane unit represented by RSiO_{1.5} (R is hydrogen or a monovalent organic group) (hereinafter, it may be referred to as a "T unit"), and contains the unit, in 90% by mol or more, more preferably in 95% by mol or more, furthermore preferably in 100% by mol of the total siloxane units (M unit, D unit, T unit, Q unit),.

Meanwhile, the M unit represents a monofunctional siloxane unit represented by R₃SiO_{0.5} (R is hydrogen or a monovalent organic group), the D unit represents a bifunctional siloxane unit represented by R₂SiO_{1.0} (R is hydrogen or a monovalent organic group), and the Q unit represents a tetrafunctional siloxane unit represented by SiO_{2.0}.

The polysilsesquioxane may contain an M unit, in addition to the T unit.

Examples of R bonded to the polysilsesquioxane include hydrogen, C₁-C₁₂ alkyl, C₂-C₁₂ alkenyl, C₁-C₁₂ alkoxy, C₁-C₁₂ acyl, C₃-C₈ cycloalkyl, and phenyl. Preferably, R is selected from hydrogen, C₁-C₆ alkyl, C₁-C₆ alkenyl, C₁-C₆ alkoxy, and phenyl. More preferably, R is selected from alkyl groups having 1 to 6 carbon atoms such as a methyl group, an ethyl group, a propyl group, a butyl group, and a hexyl group. Of those, as the organic group R, a methyl group is preferable, for the purpose of the present invention. Preferably, polymethylsilsesquioxane is used as the polysilsesquioxane, alone or in combination with other polysilsesquioxanes, particularly preferred alone.

Preferable polysilsesquioxanes as described above can be produced by a publicly known method. For example, as described in JP-A-01-217039, JP-A-5-125187 or JP-A-6-263875, the polysilsesquioxane is obtained by hydrolyzing organosilane under an acidic condition, adding and mixing an alkali aqueous solution to aqueous or aqueous/organic solvent of organosilanetriol, and leaving the product in a static state to thereby polycondensate the organosilanetriol.

As examples of commercial products of polysilsesquioxanes, mention can be made of polymethylsilsesquioxane sold under the trade name Ganzpearl SI-020 by GANZ CHEMICAL CO., LTD and under the trade name ABC E+308 by ABC NANOTECH CO., LTD.

The polysilsesquioxane is present in the polycarbonate compositions according to the present invention in an amount ranging from 1.5 wt.% to 9 wt.%, preferably 2 wt% to 6 wt.%, relative to the total weight of the composition.

### Component F

In addition to components A-E mentioned above, the polycarbonate compositions according to the present invention can optionally comprise as component F one or more additional additives conventionally used in polymer compositions in conventional amounts. Such additives are lubricants, demoulding agents (e.g. pentaerythritol tetrastearate(PETS), glycerine monostearate(GMS), their carbonates), antioxidants, dyes, pigments, UV absorbers, impact modifiers, etc.

The person skilled in the art can select the type and the amount of the additional additives so as to not significantly adversely affect the desired properties of the polycarbonate composition according to the present invention. The amount of the additional additives preferably is up to 20 wt.%, relative to the total weight of the composition.

For example, if presents, the impact modifier can be selected from core-shell impact modifiers, non-core-shell impact modifiers, and a combination thereof.

As core-shell impact modifiers, mention can be made to rubber-modified vinyl (co)polymer.

### Rubber-modified vinyl (co)polymer with a core-shell structure

Preferably, the rubber-modified vinyl (co)polymer comprises,
B1) 5 to 95, preferably 8 to 90, in particular 20 to 85 wt.%, of at least one vinyl monomer on
B2) 95 to 5, preferably 92 to 10, in particular 80 to 15 wt.%, of one or more graft bases having glass transition temperatures of < 10 °C, preferably < 0 °C, particularly preferably < -20 °C,

The wt.% is calculated based on the weight of the rubber-modified vinyl (co)polymer.

The glass transition temperature was determined by means of dynamic differential calorimetry (DSC) in accordance with the standard DIN EN 61006 at a heating rate of 10 K/min with definition of the T_{g} as the midpoint temperature (tangent method).

The at least one vinyl monomer B1 is selected from vinylaromatics and/or vinylaromatics substituted on the nucleus (such as styrene, α-methylstyrene, p-methylstyrene), vinyl cyanides (unsaturated nitriles, such as acrylonitrile and methacrylonitrile), (meth)acrylic acid (C₁-C₈)-alkyl esters, such as methyl methacrylate, ethyl methacrylate, n-butyl acrylate, t-butyl acrylate, and derivatives (such as anhydrides and imides) of unsaturated carboxylic acids, for example maleic anhydride and *N*-phenyl-maleimide, and a combination thereof.

In some embodiments, the at least one vinyl monomer B1 are preferably mixtures of
B1.1) 50 to 99, preferably 65 to 85, in particular 75 to 80 wt.%., of vinylaromatics and/or vinylaromatics substituted on the nucleus (such as styrene, α-methylstyrene, *p*-methylstyrene) and/or methacrylic acid (C₁-C₈)-alkyl esters (such as methyl methacrylate, ethyl methacrylate) and
B1.2) 1 to 50, preferably 15 to 35, in particular 20 to 25 wt.%, of vinyl cyanides (unsaturated nitriles, such as acrylonitrile and methacrylonitrile) and/or (meth)acrylic acid (C₁-C₈)-alkyl esters, such as methyl methacrylate, *n*-butyl acrylate, t-butyl acrylate, and/or derivatives (such as anhydrides and imides) of unsaturated carboxylic acids, for example maleic anhydride and *N-*phenyl-maleimide,

The wt.% is calculated based on the weight of the vinyl monomer B1.

Preferred monomer B1.1 is chosen from monomers styrene, α-methylstyrene and methyl methacrylate. Preferred monomer B1.2 is chosen from monomers acrylonitrile, maleic anhydride and methyl methacrylate. More preferably, monomer B1.1 is styrene and monomer B1.2 is acrylonitrile.

As examples of the graft base B2, mention can be made of, diene rubbers, EP(D)M rubbers, that is to say, those based on ethylene/propylene and optionally diene, and acrylate, polyurethane, silicone, and ethylene/vinyl acetate rubbers and silicone/acrylate composite rubbers.

Preferred graft base B2 is chosen from diene rubbers, for example based on butadiene and/or isoprene, EP(D)M rubbers, acrylate rubbers, or silicone/acrylate composite rubbers, with the proviso that the glass transition temperature of the rubber-modified vinyl (co)polymer is below < 10 °C, preferably < 0 °C, particularly preferably < -20 °C.

Pure polybutadiene rubber and/or silicone/acrylate composite rubber is particularly preferred as the graft base B2.

As silicone/acrylate composite rubber, silicone-butylacrylate rubber can be mentioned as an example. Preferably, the rubber-modified vinyl (co)polymer is a methyl methacrylate-grafted silicone-butyl acrylate rubber.

Particularly preferred rubber-modified vinyl (co)polymers include acrylonitrile-butadiene-styrene (ABS) or Methyl methacrylate-butadiene-styrene (MBS) copolymers, such as are described e.g. in DE-OS 2 035 390 (= US 3 644 574) or in DE-OS 2 248 242 (= GB 1 409 275) and in Ullmanns, Enzyklopädie der Technischen Chemie, vol. 19 (1980), p. 280 et seq, and methyl methacrylate-grafted silicone-butylacrylate rubber, etc.

As examples of ABS can be used in the present invention, mention can be made to ABS resin Sinopec^{®}8391 available from SINOPEC Shanghai Gaoqiao Company having a polybutadiene rubber content of 10-15 wt.% based on the ABS polymer, and ABS HRG powder Novodur^{®} P60 available from Styrolution, produced by emulsion polymerisation of 42-45 wt. %, based on the ABS polymer, of a mixture of 27 wt. % acrylonitrile and 73 wt. % styrene in the presence of 55-58 wt. %, based on the ABS polymer, of a crosslinked polybutadiene rubber (the average particle diameter d₅₀-0.3 µm), Metablen^{®} S2030 from Mitsubishi Rayon Co., Ltd.

Methyl methacrylate-butadiene-styrene (MBS) has butadiene or butadiene-styrene copolymer as the rubber phase, of which the weight percent is 60-85 wt.%, preferably 65-80 wt.%, more preferably 70-80 wt.%, based on said methyl methacrylate-butadiene-styrene as 100 wt.%. Said methyl methacrylate-butadiene-styrene preferably has PMMA or PMMA-styrene copolymer as the graft layer.

As examples of MBS can be used in the present invention, mention can be made to Kane Ace M732 purchased from Kaneka, Paraloid EXL2650J, EXL2690, EXL2691J purchased from Dow Chemicals, etc.

As non-core-shell impact modifiers, mention can be made to ethylene acrylate copolymer.

### Ethylene acrylate copolymer

Preferably, the ethylene acrylate copolymer is an ethylene-alkyl (meth)acrylate copolymer of the formula (XI), 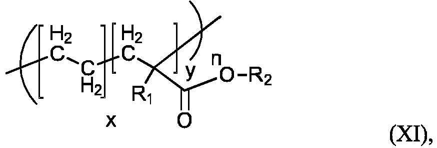 wherein
R₁ is methyl or hydrogen,
R₂ is hydrogen or a C₁-C₁₂ alkyl, preferably methyl, ethyl, propyl, isopropyl, butyl, sec-butyl, tert-butyl, isobutyl, hexyl, isoamyl, or tert-amyl,
each of x and y is an independent degree of polymerization, and
n is an integer >= 1.
x and y are independently from each other, being an integer.

The ratios of the degrees of polymerization x and y are preferably in the range x:y = from 300:1 to 10:90.

In some embodiment, x and y are independently from each other, being from 10 to 10,000.

In some embodiment, x and y are independently from each other, being from 50 to 5,000.

The ethylene-alkyl (meth)acrylate copolymer can be a random, block or multiblock copolymer or a mixture of the said structures. In one preferred embodiment, branched and unbranched ethylene-alkyl (meth)acrylate copolymer, particularly linear ethylene-alkyl (meth)acrylate copolymer, is used.

Preferably, the impact modifier is ethylene-methyl acrylate copolymer (EMA) or, ethylene-methyl acrylate copolymer is one of impact modifier. For example, the ethylene-alkyl (meth)acrylate copolymer is selected from ethylene acrylate copolymers including Elvaloy^{®} AC1820, AC1224, AC1125, AC1330 from Dupont, and Lotyl^{®} 18MA02, 20MA08, 24MA02, 24MA005, 29MA03, 30BA02, 35BA40, 17BA04, 17BA07 etc. from Arkema.

The melt flow rate (MFR) of the ethylene-alkyl (meth)acrylate copolymer (measured at 190°C for 2.16 kg load, ASTM D1238-2010) is preferably in the range from 0.5 to 40.0 g/(10 min.), particularly preferably in the range from 0.5 to 10.0 g/(10 min.), most particularly preferably in the range from 2.0 to 8.0 g/(10 min).

Preferably, if presents, the impact modifier is selected from ABS, MBS, EMA, SAN, ABS-SAN copolymers, and a combination thereof.

Advantageously, if presents, the impact modifier is present in the polycarbonate composition in an amount ranging from 5 to 20 wt.%, preferably from 10 to 15 wt.%, relative to the total weight of the polycarbonate composition.

Preferably, the polycarbonate composition according to the present invention comprises the following components, relative to the total weight of the composition:
A) 50-95 wt.% of an aromatic polycarbonate, wherein the aromatic polycarbonate is based on bisphenol A,
B) 1-20 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.3-0.7 wt.% of an anti-dripping agent, wherein polytetrafluoroethylene is contained as anti-dripping agent, more preferably the anti-dripping agent is polytetrafluorethylene;
D) 0.1-6 wt.% of a hydrolysis stabilizer, wherein the hydrolysis stabilizer is selected from boehmite, kaolin, talc, citric acid and a combination thereof, and
E) 2-9 wt.% of a polysilsesquioxane, wherein polymethylsilsesquioxane is contained as polysilsesquioxane, more preferably the polysilsesquioxane is polymethylsilsesquioxane.

More preferably, the polycarbonate composition according to the present invention consists of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.2-1 wt.% of a hydrolysis stabilizer, wherein boehmite is contained as hydrolysis stabilizer, more preferably the hydrolysis stabilizer is boehmite,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

Alternatively more preferably, the polycarbonate composition according to the present invention consists of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates and bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.1-0.5 wt.% of a hydrolysis stabilizer, wherein citric acid is contained as hydrolysis stabilizer, preferably the hydrolysis stabilizer is citric acid,
E) 2-6 wt.% of a polysilsesquioxane, wherein polymethylsilsesquioxane is contained as polysilsesquioxane, more preferably the polysilsesquioxane is polymethylsilsesquioxane,
F) up to 20 wt.% of one or more additional additives selected from lubricants, demoulding agents, antioxidants, impact modifiers, UV absorbers, and a combination thereof.

Alternatively more preferably, the polycarbonate composition according to the present invention consists of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.5-4 wt.% of a hydrolysis stabilizer, wherein kaolin is contained as hydrolysis stabilizer, preferably the hydrolysis stabilizer is kaolin,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

Alternatively more preferably, the polycarbonate composition according to the present invention consists of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP) and resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.8-6 wt.% of a hydrolysis stabilizer, wherein talc is contained as hydrolysis stabilizer, preferably the hydrolysis stabilizer is talc,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

The inventors have discovered that the polycarbonate compositions according to the present invention have a good flame retardance even after 7 days immersion in hot water of 70 °C, and that an article with a thickness of 1.0 mm prepared from the compositions can achieve V-0 performance before and after 7 days immersion in hot water of 70 °C.

### Preparation of the polycarbonate compositions

The polycarbonate compositions according to the present invention can be in the form of, for example, pellets, and can be prepared by a variety of methods involving intimate admixing of the materials desired in the composition.

For example, the materials desired in the composition are first blended in a high speed mixer. Other low shear processes, including but not limited to hand mixing, can also accomplish this blending. The blend is then fed into the throat of a twin-screw extruder via a hopper. Alternatively, at least one of the components can be incorporated into the composition by feeding it directly into the extruder at the throat and/or downstream through a side stuffer. Additives can also be compounded into a masterbatch with a desired polymeric resin and fed into the extruder. The extruder is generally operated at a temperature higher than that necessary to cause the composition to flow. The extrudate is immediately quenched in a water bath and pelletized. The pellets can be one-fourth inch long or less as described. Such pellets can be used for subsequent molding, shaping or forming.

Melt blending methods are preferred due to the availability of melt blending equipment in commercial polymer processing facilities.

Illustrative examples of equipment used in such melt processing methods include co-rotating and counter-rotating extruders, single screw extruders, co-kneaders, and various other types of extrusion equipment.

The temperature of the melt in the processing is preferably minimized in order to avoid excessive degradation of the polymers. It is often desirable to maintain the melt temperature between 230°C and 350°C in the molten resin composition, although higher temperatures can be used provided that the residence time of the resin in the processing equipment is kept short.

In some cases, the melting composition exits from a processing equipment such as an extruder through small exit holes in a die. The resulting strands of the molten resin are cooled by passing the strands through a water bath. The cooled strands can be chopped into small pellets for packaging and further handling.

### Shaped articles

The polycarbonate compositions according to the present invention can be used, for example for the production of various types of shaped articles.

According to the second aspect, the present invention also provides a shaped article made from a polycarbonate composition according to the first aspect of the present invention.

As examples of such shaped articles mention can be made of, for example, films; profiles; all kinds of housing parts, e.g. for domestic appliances such as juice presses, coffee machines and mixers, or for office machines such as monitors, flat screens, notebooks, printers and copiers; sheets; tubes; electrical conduits; windows, doors and other profiles for the building sector (interior and exterior applications); electrical and electronic parts such as switches, plugs and sockets; and body parts or interior trim for commercial vehicles, especially for the motor vehicle sector.

In particular, the shaped article can be any of the following: interior trim for rail vehicles, ships, aeroplanes, buses and other motor vehicles, housings for electrical equipment containing small transformers, housings for information processing and transmission equipment, housings and sheathing for medical equipment, housings for safety devices, moulded parts for sanitary and bath fittings, covering grids for ventilation apertures and housings for garden tools, and battery packages

### Preparation of shaped articles

The polycarbonate compositions according to the present invention can be processed into shaped articles by a variety of means such as injection moulding, extrusion moulding, blow moulding or thermoforming to form shaped articles.

According to the third aspect, the present invention provides a process for preparing a shaped article according to the second aspect of the present invention, comprising injection moulding, extrusion moulding, blow moulding or thermoforming the polycarbonate composition according to the first aspect of the present invention.

The examples which follow serve to illustrate the invention in greater detail.

### Examples

### Materials used

### Component A

A1: an aromatic polycarbonate (PC) resin based on bisphenol A having a weight average molecular weight of about 24,000 g/mol, as measured by GPC with polycarbonate based on bisphenol A as standard, available as Makrolon^{®} 2400 from Covestro Polymer, Co., Ltd.

A1: an aromatic polycarbonate (PC) resin based on bisphenol A having a weight average molecular weight of about 26,000 g/mol, as measured by GPC with polycarbonate based on bisphenol A as standard, available as Makrolon^{®} 2600 from Covestro Polymer, Co., Ltd.

A2: an aromatic polycarbonate (PC) resin based on bisphenol A having a weight average molecular weight of about 28,000 g/mol, as measured by GPC with polycarbonate based on bisphenol A as standard, available as Makrolon^{®} 2800 from Covestro Polymer, Co., Ltd.

A3: an aromatic polycarbonate (PC) resin based on bisphenol A having a weight average molecular weight of about 31,000 g/mol, as measured by GPC with polycarbonate based on bisphenol A as standard, available as Makrolon^{®} 3100 from Covestro Polymer, Co., Ltd.

### Component B

B1: bisphenol-A bis(diphenyl phosphate) (BDP), available as WSFR-BDP from Zhejiang Wansheng S&T Co., Ltd.

B2: a phosphazene compound (a cyclic phenoxy-phosphazene oligomer), available as Rabitle^{®} FP-110 from Fushimi Pharmaceutical Co., Ltd.

### Component C

C1: a masterbatch of polytetrafluoroethylene and Styrene-Acrylonitrile (SAN) in a weight ratio of 1:1, available as ADS 5000 from Chemical Innovation Co., Ltd., Thailand.

### Component D

D1: boehmite, available as Pural^{®} 200 from Sasol Germany GmbH.

D2: kaolin, available as Polyfil HG90 from KaMin LLC

D3: talc, available as HTP^{®} Ultra 5C from IMIFABI SPA.

D4: citric acid, available as citric acid anhydrous from Weifang Ensign Industry Co., Ltd.

### Component E

E1: polymethylsilsesquioxane with a mean particle diameter: 0.8 ± 0.2 µm determined by MALVERN MS2000, available as ABC E+308 from ABC NANOTECH CO., LTD.

E2: polymethylsilsesquioxane with an average particle size of 1.4-2.4 µm determined by Coulter Counter method, available as Ganzpearl SI-020 from GANZ CHEMICAL CO., LTD.

### Component F

F1: an UV absorber, 2,2'-methylenebis(6-(benzotriazol-2-yl)-4-tert-octylphenol, available as TINUVIN360 from BASF.

F2: an antioxidant, a mixture of 80 wt.% of Irgafos^{®} 168 (tris(2,4-ditert-butylphenyl) phosphite) and 20 wt.% of Irganox^{®} 1076 (2,6-ditert-butyl-4-(octa-decanoxycarbonylethyl)phenol, available as Irganox^{®} B900 from BASF (China) Company Limited.

F3: a demoulding agent, pentaerythritol tetrastearate (PETS), available as Loxiol P 861 from Emery Oleochemicals Sdn Bhd Malaysia.

F4: an impact modifier, styrene-acrylate copolymer (SAN) containing 23 wt.% acrylonitrile and 77 wt.% styrene, available as D50 from the company INEOS.

F5: an impact modifier ABS copolymer prepared by emulsion polymerization of 58 wt. %, based on the ABS polymer, of a mixture of 24 wt. % of acrylonitrile and 76 wt. % of styrene in the presence of 42 wt. %, based on the ABS polymer, of a linear polybutadiene rubber, available as P60 from Styrolution South East Asia Pte Ltd., Singapore.

### Test methods

The physical properties of the compositions according to the examples were tested as follows.

The flame retardance was evaluated on 127 mm x 12.7 mm x 1.0 mm bars after conditioned for 48 hours at 23°C and 50 RH according to UL94: 2015.

The hydrolysis stability of the compositions prepared was assessed based on the change in flame retardancy rate measured on 127 mm x 12.7 mm x 1.0 mm bars according to UL94:2015 before and after the bars were immerged into 70 °C water for 7 days according to UL746C: 2002.

### Invention examples 1-6 (IE1-IE6) and comparative examples 1-6 (CE1-CE6)

The materials listed in Table 1 were compounded on a twin-screw extruder (ZSK-26) (Werner and Pfleider) at a speed of rotation of 225 rpm, a throughput of 20 kg/h, and a machine temperature of 260°C, and granulated. All parts by weight are calculated according to the weight of active ingredient.

The granules were processed into corresponding test specimens on a 370S type injection moulding machine from the company Arburg with a melting temperature of 260 °C, a mold temperature 100 °C and injection speed of 50 mm/s.

The physical properties of compositions obtained were tested and the results were summarized in Table 1.

**Table 1**

| Components | | CE1 | CE 2 | CE 3 | CE 4 | CE 5 | CE 6 | IE1 | IE2 | IE3 | IE4 | IE5 | IE6 |
|---|---|---|---|---|---|---|---|---|---|---|---|---|---|
| | | [pbw] | [pbw] | [pbw] | [pbw] | [pbw] | [pbw] | [pbw] | [pbw] | [pbw] | [pbw] | [pbw] | [pbw] |
| A1 | Makrolon^{®} 2400 | - | - | - | - | - | - | - | - | - | - | 90.1 | 88.1 |
| A2 | Makrolon^{®} 2600 | 92.1 | 90.65 | 90.65 | 86.65 | 91.6 | 91.1 | - | - | 90.1 | 88.1 | - | - |
| A3 | Makrolon^{®} 2800 | - | - | - | - | - | - | - | 90.1 | - | - | - | - |
| A4 | Makrolon^{®} 3100 | - | - | - | - | - | - | 90.1 | - | - | - | - | - |
| B1 | BDP | 6 | 6 | 6 | 6 | 6 | 6 | 6 | 6 | 6 | 6 | 6 | 6 |
| C1 | ADS 5000 | 0.5 | 0.5 | 0.5 | 0.5 | 0.5 | 0.5 | 0.5 | 0.5 | 0.5 | 0.5 | 0.5 | 0.5 |
| D1 | Pural^{®} 200 | 0.55 | 2 | - | - | 0.55 | 0.55 | 0.55 | 0.55 | 0.55 | 0.55 | 0.55 | 0.55 |
| E1 | E+308 | - | - | 2 | 6 | 0.5 | 1 | 2 | 2 | 2 | 4 | 2 | 4 |
| F1 | TINUVIN360 | 0.3 | 0.3 | 0.3 | 0.3 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 | 0.4 | 0.4 | 0.4 | 0.4 |

| Flame-retardant level at 1.0 mm | | | | | | | | | | | | | |
|---|---|---|---|---|---|---|---|---|---|---|---|---|---|
| Before immersion in water | | V-0 | V-0 | V-0 | V-0 | V-0 | V-0 | V-0 | V-0 | V-0 | V-0 | V-0 | V-0 |
| After immersion in water at 70°C for 7 days | | V-2 | V-2 | V-2 | V-1 | V-1 | V-2 | V-0 | V-0 | V-0 | V-0 | V-0 | V-0 |
| Hydrolysis resistance | | Failed | Failed | Failed | Failed | Failed | Failed | Pass | Pass | Pass | Pass | Pass | Pass |

The compositions of comparative examples 1-2 (CE1-CE2) not comprising any polysilsesquioxane demonstrated a flame-retardant level of V-0 before immersion in water, and a flame-retardant level of V-2 after immersion in water at 70 °C for 7 days, meaning that the hydrolysis resistance is not acceptable.

The compositions of comparative examples 3-4 (CE3-CE4) not comprising any hydrolysis stabilizer demonstrated a flame-retardant level of V-0 before immersion in water, and a flame-retardant level of V-1 or V-2 after immersion in water at 70°C for 7 days, meaning that the hydrolysis resistance is not acceptable.

The compositions of comparative examples 5-6 (CE5-CE6) comprising all of components A-E, wherein the amount of component E is no more than 1 wt.%, relative to the total weight of each composition, demonstrated a flame-retardant level of V-0 before immersion in water, and a flame-retardant level of V-1 or V-2 after immersion in water at 70 °C for 7 days, meaning that the hydrolysis resistance is not acceptable.

The compositions of invention examples 1-6 (IE1-IE6) comprising all of components A-E, wherein the amount of polysilsesquioxane is no less than 2 wt.% relative to the total weight of each composition, demonstrate a flame-retardant level of V-0 before immersion in water, and a flame-retardant level of V-0 after immersion in water at 70 °C for 7 days, meaning that the hydrolysis resistance is excellent.

### Invention examples 7-13 (IE7-IE13)

Similarly, the materials listed in Table 2 were compounded, the physical properties of the compositions obtained were tested and the results were summarized in Table 2.

**Table 2**

| Components | | IE3 | IE4 | IE7 | IE8 | IE9 | IE10 | IE11 | IE12 | IE13 |
|---|---|---|---|---|---|---|---|---|---|---|
| | | [pbw] | [pbw] | [pbw] | [pbw] | [pbw] | [pbw] | [pbw] | [pbw] | [pbw] |
| A2 | Makrolon^{®} 2600 | 90.1 | 88.1 | 86.1 | 88.1 | 86.1 | 84.1 | 86.1 | 84.1 | 82.1 |
| B1 | BDP | 6 | 6 | 6 | 8 | 8 | 8 | 10 | 10 | 10 |
| C1 | ADS 5000 | 0.5 | 0.5 | 0.5 | 0.5 | 0.5 | 0.5 | 0.5 | 0.5 | 0.5 |
| D1 | Pural^{®} 200 | 0.55 | 0.55 | 0.55 | 0.55 | 0.55 | 0.55 | 0.55 | 0.55 | 0.55 |
| E1 | E+308 | 2 | 4 | 6 | 2 | 4 | 6 | 2 | 4 | 6 |
| F1 | TINUVIN360 | 0.3 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 | 0.4 |

| Flame-retardant level at 1.0 mm | | | | | | | | | | |
|---|---|---|---|---|---|---|---|---|---|---|
| Before immersion in water | | V-0 | V-0 | V-0 | V-0 | V-0 | V-0 | V-0 | V-0 | V-0 |
| After immersion in water at 70°C for 7 days | | V-0 | V-0 | V-0 | V-0 | V-0 | V-0 | V-0 | V-0 | V-0 |
| Hydrolysis resistance | | Pass | Pass | Pass | Pass | Pass | Pass | Pass | Pass | Pass |

The compositions of invention examples 7-13 (IE7-IE13) comprising all of components A-E, wherein the amount of polysilsesquioxane is no less than 2 wt.% relative to the total weight of the composition, demonstrate a flame-retardant level of V-0 before immersion in water, and a flame-retardant level of V-0 after immersion in water at 70 °C for 7 days, meaning that the hydrolysis resistance is excellent.

### Invention examples 16-19 (IE16-IE19) and comparative examples 7-9 (CE7-CE9)

Similarly, the materials listed in Table 3 were compounded, the physical properties of the compositions obtained were tested and the results were summarized in Table 3.

**Table 3**

| Components | | CE 7 | IE14 | IE15 | CE 8 | IE16 | IE17 | CE 9 | IE18 | IE19 |
|---|---|---|---|---|---|---|---|---|---|---|
| | | [pbw] | [pbw] | [pbw] | [pbw] | [pbw] | [pbw] | [pbw] | [pbw] | [pbw] |
| A2 | Makrolon^{®} 2600 | 92.45 | 89.45 | 89.45 | 91.65 | 88.65 | 87.65 | 91.15 | 88.15 | 86.65 |
| B1 | BDP | 6 | 6 | 6 | 6 | 6 | 6 | 6 | 6 | 6 |
| C1 | ADS 5000 | 0.5 | 0.5 | 0.5 | 0.5 | 0.5 | 0.5 | 0.5 | 0.5 | 0.5 |
| D2 | HG90 | - | - | - | 1 | 1 | 2 | - | - | - |
| D3 | Ultra 5C | - | - | - | - | - | - | 1.5 | 1.5 | 3 |
| D4 | citric acid | 0.2 | 0.2 | 0.2 | - | - | - | - | - | - |
| E1 | E+308 | - | 3 | - | - | 3 | 3 | - | 3 | 3 |
| E2 | SI-020 | - | - | 3 | - | - | - | - | - | - |
| F1 | TINUVIN360 | 0.3 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 | 0.4 |

| Flame-retardant level at 1.0 mm | | | | | | | | | | |
|---|---|---|---|---|---|---|---|---|---|---|
| Before immersion in water | | V-0 | V-0 | V-0 | V-0 | V-0 | V-0 | V-0 | V-0 | V-0 |
| After immersion in water at 70°C for 7 days | | V-2 | V-0 | V-0 | V-1 | V-0 | V-0 | V-1 | V-0 | V-0 |
| Hydrolysis resistance | | Failed | Pass | Pass | Failed | Pass | Pass | Failed | Pass | Pass |

The compositions of comparative examples 7-9 (CE7-CE9) not comprising any polysilsesquioxane demonstrated a flame-retardant level of V-0 before immersion in water, and a flame-retardant level of V-2 or V-1 after immersion in water at 70 °C for 7 days, meaning that the hydrolysis resistance is not acceptable.

The compositions of invention examples 14-19 (IE14-IE19) comprising all of components A-E, wherein the amount of polysilsesquioxane is no less than 2 wt.% relative to the total weight of the composition, demonstrate a flame-retardant level of V-0 before immersion in water, and a flame-retardant level of V-0 after immersion in water at 70 °C for 7 days, meaning that the hydrolysis resistance is excellent.

### Invention examples 20-27 (IE20-IE27) and comparative examples 10-14 (CE10-CE14)

Similarly, the materials listed in Table 4 were compounded, the physical properties of the compositions obtained were tested and the results were summarized in Table 4.

**Table 4**

| Components | | CE 10 | CE 11 | CE 12 | CE 13 | CE 14 | IE20 | IE21 | IE22 | IE23 | IE24 | IE25 | IE26 | IE27 |
|---|---|---|---|---|---|---|---|---|---|---|---|---|---|---|
| | | [pbw] | [pbw] | [pbw] | [pbw] | [pbw] | [pbw] | [pbw] | [pbw] | [pbw] | [pbw] | [pbw] | [pbw] | [pbw] |
| A2 | Makrolon^{®} 2600 | 95.1 | 93.65 | 92.65 | 90.65 | 94.1 | 93.1 | 92.1 | 90.1 | 88.1 | 91.1 | 90.1 | 88.1 | 86.1 |
| B2 | PNZ | 3 | 3 | 3 | 5 | 3 | 2 | 3 | 5 | 7 | 2 | 3 | 5 | 7 |
| C1 | ADS 5000 | 0.5 | 0.5 | 0.5 | 0.5 | 0.5 | 0.5 | 0.5 | 0.5 | 0.5 | 0.5 | 0.5 | 0.5 | 0.5 |
| D1 | Pural^{®} 200 | 0.55 | 2 | - | - | 0.55 | 0.55 | 0.55 | 0.55 | 0.55 | 0.55 | 0.55 | 0.55 | 0.55 |
| E1 | E+308 | - | - | 3 | 3 | 1 | 3 | 3 | 3 | 3 | 5 | 5 | 5 | 5 |
| F1 | TINUVIN360 | 0.3 | 0.3 | 0.3 | 0.3 | 0.3 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 | 0.4 | 0.4 | 0.4 | 0.4 | 0.4 |

| Flame-retardant level at 1.0 mm | | | | | | | | | | | | | | |
|---|---|---|---|---|---|---|---|---|---|---|---|---|---|---|
| Before immersion in water | | V-0 | V-0 | V-0 | V-0 | V-0 | V-0 | V-0 | V-0 | V-0 | V-0 | V-0 | V-0 | V-0 |
| After immersion in water at 70°C for 7 days | | V-2 | V-2 | V-NOT* | V1 | V-2 | V-0 | V-0 | V-0 | V-0 | V-0 | V-0 | V-0 | V-0 |
| Hydrolysis resistance | | Failed | Failed | Failed | Failed | Failed | Pass | Pass | Pass | Pass | Pass | Pass | Pass | Pass |

| | | | | | | | | | | | | | | |
|---|---|---|---|---|---|---|---|---|---|---|---|---|---|---|
| V-NOT* means the flame-retardant level is worse than V2, according to UL94: 2015. | | | | | | | | | | | | | | |

The compositions of comparative examples 10-11 (CE10-CE11) not comprising any polysilsesquioxane demonstrated a flame-retardant level of V-0 before immersion in water, and a flame-retardant level of V-2 after immersion in water at 70 °C for 7 days, meaning that the hydrolysis resistance is not acceptable.

The compositions of comparative examples 12-13 (CE12-CE13) not comprising any hydrolysis stabilizer demonstrated a flame-retardant level of V-0 before immersion in water, and a flame-retardant level of V-1 or worse after immersion in water at 70 °C for 7 days, meaning that the hydrolysis resistance is not acceptable.

The composition of comparative example 14 (CE14) comprising all of components A-E but the amount of polysilsesquioxane is less than 2 wt.% relative to the total weight of the composition, demonstrate a flame-retardant level of V-0 before immersion in water, and a flame-retardant level of V-2 or V-1 after immersion in water at 70 °C for 7 days, meaning that the hydrolysis resistance is not acceptable.

The compositions of invention examples 20-27 (IE20-IE27) comprising all of components A-E, wherein the amount of polysilsesquioxane is no less than 2 wt.% relative to the total weight of the composition, demonstrate a flame-retardant level of V-0 before immersion in water, and a flame-retardant level of V-0 after immersion in water at 70 °C for 7 days, meaning that the hydrolysis resistance is excellent.

### Invention examples 28-31 (IE28-IE31) and comparative examples 15-18 (CE15-CE18)

Similarly, the materials listed in Table 5 were compounded, the physical properties of the compositions obtained were tested and the results were summarized in Table 5.

**Table 5**

| Components | | CE15 | CE16 | CE17 | CE 18 | IE28 | IE29 | IE30 | IE31 |
|---|---|---|---|---|---|---|---|---|---|
| | | [pbw] | [pbw] | [pbw] | [pbw] | [pbw] | [pbw] | [pbw] | [pbw] |
| A2 | Makrolon^{®} 2600 | 80.1 | 75.1 | 70.1 | 75.1 | 74.1 | 69.1 | 64.1 | 69.1 |
| B1 | BDP | 13 | 13 | 13 | 13 | 13 | 13 | 13 | 13 |
| C1 | ADS 5000 | 0.5 | 0.5 | 0.5 | 0.5 | 0.5 | 0.5 | 0.5 | 0.5 |
| D1 | Pural^{®} 200 | 0.55 | 0.55 | 0.55 | 0.55 | 0.55 | 0.55 | 0.55 | 0.55 |
| E1 | E+308 | - | - | - | - | 6 | 6 | 6 | 6 |
| F1 | TINUVIN360 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 |
| F4 | SAN | 5 | 10 | 15 | - | 5 | 10 | 15 | - |
| F5 | p60 | - | - | - | 10 | - | - | - | 10 |

| Flame-retardant level at 1.0 mm | | | | | | | | | |
|---|---|---|---|---|---|---|---|---|---|
| Before immersion in water | | V-0 | V-0 | V-0 | V-0 | V-0 | V-0 | V-0 | V-0 |
| After immersion in water at 70°C for 7 days | | V-1 | V-2 | V-2 | V-NOT* | V-0 | V-0 | V-0 | V-0 |
| Hydrolysis resistance | | Failed | Failed | Failed | Failed | Pass | Pass | Pass | Pass |

| | | | | | | | | | |
|---|---|---|---|---|---|---|---|---|---|
| V-NOT* means the flame-retardant level is worse than V2, according to UL94: 2015. | | | | | | | | | |

The compositions of comparative examples 15-18 (CE15-CE18) not comprising any polysilsesquioxane demonstrated a flame-retardant level of V-0 before immersion in water, and a flame-retardant level of V-1 or V-2 after immersion in water at 70 °C for 7 days, meaning that the hydrolysis resistance is not acceptable.

The compositions of invention examples 28-31 (IE28-IE31) comprising all of components A-E, wherein the amount of polysilsesquioxane is no less than 2 wt.% relative to the total weight of the composition, demonstrate a flame-retardant level of V-0 before immersion in water, and a flame-retardant level of V-0 after immersion in water at 70 °C for 7 days, meaning that the hydrolysis resistance is excellent.

### Invention examples 32-38 (IE32-IE38) and comparative examples 19-25 (CE19-CE25)

Similarly, the materials listed in Table 6 were compounded, the physical properties of the compositions obtained were tested and the results were summarized in Table 6.

**Table 6**

| Components | | CE19 | CE20 | CE21 | CE 22 | IE32 | IE33 | IE34 | IE35 | CE23 | CE24 | CE25 | IE36 | IE37 | IE38 |
|---|---|---|---|---|---|---|---|---|---|---|---|---|---|---|---|
| | | [pbw] | [pbw] | [pbw] | [pbw] | [pbw] | [pbw] | [pbw] | [pbw] | [pbw] | [pbw] | [pbw] | [pbw] | [pbw] | [pbw] |
| A2 | Makrolon^{®}2600 | 80.1 | 75.1 | 70.1 | 75.1 | 74.1 | 69.1 | 64.1 | 69.1 | 74.1 | 69.1 | 64.1 | 74.1 | 69.1 | 64.1 |
| B2 | PNZ | 13 | 13 | 13 | 13 | 13 | 13 | 13 | 13 | 13 | 13 | 13 | 13 | 13 | 13 |
| C1 | ADS 5000 | 0.5 | 0.5 | 0.5 | 0.5 | 0.5 | 0.5 | 0.5 | 0.5 | 0.5 | 0.5 | 0.5 | 0.5 | 0.5 | 0.5 |
| D1 | Pural^{®} 200 | 0.55 | 0.55 | *0.55* | 0.55 | 0.55 | 0.55 | 0.55 | 0.55 | 0.55 | *0.55* | 0.55 | 0.55 | 0.55 | 0.55 |
| E1 | E+308 | - | - | - | - | 6 | 6 | 6 | 6 | - | - | - | 3 | 3 | 3 |
| F1 | TINUVIN360 | 0.3 | 0.3 | 0.3 | 0.3 | 0.3 | 0.3 | 0.3 | 0.3 | 0.3 | 0.3 | 0.3 | 0.3 | 0.3 | 0.3 |
| F2 | B900 | 0.15 | 0.15 | 0.15 | 0.15 | 0.15 | 0.15 | 0.15 | 0.15 | 0.15 | 0.15 | 0.15 | 0.15 | 0.15 | 0.15 |
| F3 | Loxiol P 861 | 0.4 | 0.4 | 0.4 | 0.4 | 0.4 | 0.4 | 0.4 | 0.4 | 0.4 | 0.4 | 0.4 | 0.4 | 0.4 | 0.4 |
| F4 | SAN | 5 | 10 | 15 | - | 5 | 10 | 15 | - | 5 | 10 | 15 | 5 | 10 | 15 |
| F5 | P60 | - | - | - | 10 | - | - | - | 10 | 6 | 6 | 6 | 3 | 3 | 3 |

| Flame-retardant level at 1.0 mm | | | | | | | | | | | | | | | |
|---|---|---|---|---|---|---|---|---|---|---|---|---|---|---|---|
| Before immersion in water | | V-0 | V-0 | V-0 | V-0 | V-0 | V-0 | V-0 | V-0 | V-0 | V-0 | V-0 | V-0 | V-0 | V-0 |
| After immersion in water at 70°C for 7 days | | V-2 | V-2 | V-2 | V-NOT* | V-0 | V-0 | V-0 | V-0 | V-1 | V-1 | V-1 | V-0 | V-0 | V-0 |
| Hydrolysis resistance | | Failed | Failed | Failed | Failed | Pass | Pass | Pass | Pass | Failed | Failed | Failed | Pass | Pass | Pass |

| | | | | | | | | | | | | | | | |
|---|---|---|---|---|---|---|---|---|---|---|---|---|---|---|---|
| V-NOT* means the flame-retardant level is worse than V2, according to UL94: 2015. | | | | | | | | | | | | | | | |

The compositions of comparative examples 19-25 (CE19-CE25) not comprising any polysilsesquioxane demonstrated a flame-retardant level of V-0 before immersion in water, and a flame-retardant level of V-2 or worse after immersion in water at 70°C for 7 days, meaning that the hydrolysis resistance is not acceptable.

The compositions of invention examples 32-38 (IE32-IE38) comprising all of components A-E, wherein the amount of polysilsesquioxane is no less than 1.5 wt.% relative to the total weight of the composition, demonstrate a flame-retardant level of V-0 before immersion in water, and a flame-retardant level of V-0 after immersion in water at 70 °C for 7 days, meaning that the hydrolysis resistance is excellent.

From the examples according to the invention illustrated above, it can be concluded that the composition according to the present invention have a good combination of hydrolysis resistance and flame retardance.

## Claims

1. A polycarbonate composition comprising the following components, relative to the total weight of the composition:
A) 50-95 wt.% of an aromatic polycarbonate;
B) 1-20 wt.% of a phosphorus-containing flame retardant;
C) 0.3-0.7 wt.% of an anti-dripping agent;
D) 0.1-6 wt.% of a hydrolysis stabilizer; and
E) 1.5-9 wt.% of a polysilsesquioxane,
wherein the hydrolysis stabilizer is selected from mineral clays, organic acids, and a combination thereof.

2. Composition according to Claim 1, wherein the phosphorus containing flame retardant is selected from phosphorus compounds of the general formula (VII): 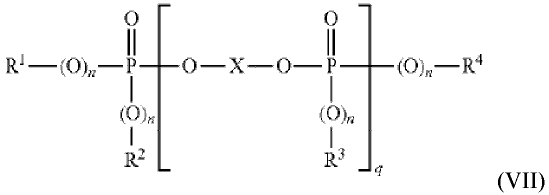 wherein
R¹, R², R³ and R⁴, independently of one another, each denote C₁-C₈ alkyl, C₅-C₆ cycloalkyl, C₆-C₂₀ aryl or C₇-C₁₂ aralkyl each optionally alkyl-substituted, preferably C₁-C₄ alkyl-substituted,
n independently of one another, denotes 0 or 1,
q denotes 0 to 30, and
X denotes a mononuclear or polynuclear aromatic residue with 6 to 30 carbon atoms or a linear or branched aliphatic residue with 2 to 30 carbon atoms, which can be OH-substituted and can contain up to eight ether bonds;
cyclic phosphazenes of formula (IX): 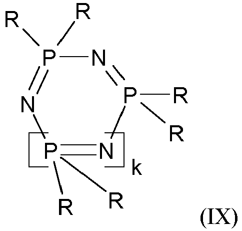 wherein
k is an integer from 1 to 10, preferably a number from 1 to 8 and particularly preferably 1 to 5
and wherein
R are in each case identical or different and are
- an amine radical,
- C₁-C₈ alkyl in each case optionally halogenated, preferably with fluorine and more preferably monohalogenated, preferably methyl, ethyl, propyl or butyl,
- C₁-C₈ alkoxy, preferably methoxy, ethoxy, propoxy or butoxy,
- C₅-C₆ cycloalkyl in each case optionally substituted by alkyl, preferably C₁-C₄ alkyl, and/or halogen, preferably chlorine and/or bromine,
- C₆-C₂₀-aryloxy in each case optionally substituted by alkyl, preferably C₁-C₄-alkyl, and/or halogen, preferably chlorine or bromine, and/or hydroxyl, preferably phenoxy or naphthyloxy,
- C₇-C₁₂ aralkyl in each case optionally substituted by alkyl, preferably C₁-C₄-alkyl, and/or halogen, preferably chlorine and/or bromine, preferably phenyl-C₁-C₄ alkyl, or
- a halogen radical, preferably chlorine or fluorine, or
- an OH radical; and
a combination thereof.

3. Composition according to Claim 1 or 2, wherein the phosphorus-containing flame retardant is selected from tributyl phosphate, triphenyl phosphate (TPP), tricresyl phosphate, diphenyl cresyl phosphate, diphenyl octyl phosphate, diphenyl 2-ethylcresyl phosphate, tri(isopropylphenyl)phosphate, resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof.

4. Composition according to any of Claims 1 to 3, wherein the anti-dripping agent is selected from fluorinated polyolefins, polyvinylidene fluoride, tetrafluoroethylene/hexafluoropropylene copolymer, ethylene/tetrafluoroethylene copolymer, and a combination thereof.

5. Composition according to any of Claims 1 to 4, wherein the hydrolysis stabilizer is selected from boehmite, kaolin, talc, citric acid, and a combination thereof.

6. Composition according to any of Claims 1 to 5, wherein the polysilsesquioxane has a trifunctional siloxane unit represented by RSiO_{1.5}, R is selected from hydrogen, C₁-C₁₂ alkyl, C₂-C₁₂ alkenyl, C₁-C₁₂ alkoxy, C₁-C₁₂ acyl, C₃-C₈ cycloalkyl, hydroxy, and phenyl, and contains the unit, in 90% by mol or more, preferably in 95% by mol or more, more preferably in 100% by mol of the total siloxane units.

7. Composition according to Claim 1, comprising the following components, relative to the total weight of the composition:
A) 50-95 wt.% of an aromatic polycarbonate, wherein the aromatic polycarbonate is based on bisphenol A,
B) 1-20 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof,
C) 0.3-0.7 wt.% of an anti-dripping agent, wherein polytetrafluoroethylene is contained as anti-dripping agent, more preferably the anti-dripping agent is polytetrafluorethylene;
D) 0.1-6 wt.% of a hydrolysis stabilizer, wherein the hydrolysis stabilizer is selected from boehmite, kaolin, talc, citric acid, and a combination thereof, and
E) 1.5-9 wt.% of a polysilsesquioxane, wherein polymethylsilsesquioxane is contained as polysilsesquioxane, more preferably the polysilsesquioxane is polymethylsilsesquioxane.

8. Composition according to Claim 1, consisting of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), and resorcinol bis(diphenyl phosphate), phenoxyphosphazene, and a combination thereof,
C) 0.4-0.6 wt.% of an anti-dripping agent, wherein polytetrafluoroethylene is contained as anti-dripping agent, more preferably the anti-dripping agent is polytetrafluorethylene;
D) 0.2-1 wt.% of a hydrolysis stabilizer, wherein boehmite is contained as hydrolysis stabilizer, more preferably the hydrolysis stabilizer is boehmite,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

9. Composition according to Claim 1, consisting of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.1-0.5 wt.% of a hydrolysis stabilizer, wherein citric acid is contained as hydrolysis stabilizer, preferably the hydrolysis stabilizer is citric acid,
E) 2-6 wt.% of a polysilsesquioxane, wherein polymethylsilsesquioxane is contained as polysilsesquioxane, more preferably the polysilsesquioxane is polymethylsilsesquioxane,
F) up to 20 wt.% of one or more additional additives selected from lubricants, demoulding agents, antioxidants, impact modifiers, UV absorbers, and a combination thereof.

10. Composition according to Claim 1, consisting of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.5-4 wt.% of a hydrolysis stabilizer, wherein kaolin is contained as hydrolysis stabilizer, preferably the hydrolysis stabilizer is kaolin,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

11. Composition according to Claim 1, consisting of the following components, relative to the total weight of the composition:
A) 60-95 wt.% of an aromatic polycarbonate, wherein the aromatic polycarbonate is based on bisphenol A,
B) 2-15 wt.% of a phosphorus-containing flame retardant, wherein the phosphorus-containing flame retardant is selected from resorcinol bridged oligophosphates, bisphenol A bridged oligophosphates, propoxyphosphazene, phenoxyphosphazene, methylphenoxyphosphazene, aminophosphazene, fluoroalkylphosphazenes, and a combination thereof, preferably from bisphenol A bis(diphenyl phosphate (BDP), resorcinol bis(diphenyl phosphate), phenoxyphosphazene, and a combination thereof;
C) 0.4-0.6 wt.% of an anti-dripping agent, wherein polytetrafluoroethylene is contained as anti-dripping agent, more preferably the anti-dripping agent is polytetrafluorethylene;
D) 0.8-6 wt.% of a hydrolysis stabilizer, wherein talc is contained as hydrolysis stabilizer, preferably the hydrolysis stabilizer is talc,
E) 2-6 wt.% of a polysilsesquioxane, wherein polymethylsilsesquioxane is contained as polysilsesquioxane, more preferably the polysilsesquioxane is polymethylsilsesquioxane, and
F) up to 20 wt.% of one or more additional additives selected from lubricants, demoulding agents, antioxidants, impact modifiers, UV absorbers, and a combination thereof.

12. Composition according to any of Claims 1-11, further comprising an impact modifiers selected from ABS, MBS, EMA, SAN, ABS-SAN copolymers, and a combination thereof.

13. A shaped article made from the composition according to any of Claims 1 to 12.

## Patentansprüche

1. Polycarbonatzusammensetzung, umfassend die folgenden Komponenten, bezogen auf das Gesamtgewicht der Zusammensetzung:
A) zu 50-95 Gew.-% ein aromatisches Polycarbonat,
B) zu 1-20 Gew.-% ein phosphorhaltiges Flammschutzmittel;
C) zu 0,3-0,7 Gew.-% ein Antidrippingmittel;
D) zu 0,1-6 Gew.-% einen Hydrolysestabilisator; und
E) zu 1,5-9 Gew.-% ein Polysilsesquioxan,
wobei der Hydrolysestabilisator aus mineralischen Tonen, organischen Säuren und einer Kombination davon ausgewählt ist.

2. Zusammensetzung nach Anspruch 1, wobei das phosphorhaltige Flammschutzmittel aus Phosphorverbindungen der allgemeinen Formel (VII) ausgewählt ist: 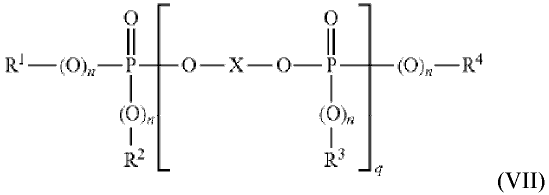 wobei
R¹, R², R³ und R⁴ unabhängig voneinander für C₁-C₈-Alkyl, C₅-C₆-Cycloalkyl, C₆-C₂₀-Aryl oder C₇-C₁₂-Aralkyl, jeweils gegebenenfalls mit Alkyl substituiert, vorzugsweise mit C₁-C₄-Alkyl substituiert, stehen,
n unabhängig voneinander für 0 oder 1 steht,
q für 0 bis 30 steht und
X für einen ein- oder mehrkernigen aromatischen Rest mit 6 bis 30 Kohlenstoffatomen oder einen linearen oder verzweigten aliphatischen Rest mit 2 bis 30 Kohlenstoffatomen steht, der OH-substituiert sein kann und bis zu acht Etherbindungen enthalten kann;
cyclischen Phosphazenen der Formel (IX): 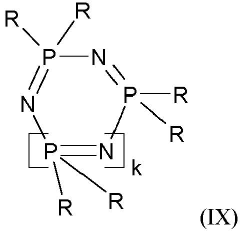
wobei
k für eine ganze Zahl von 1 bis 10, vorzugsweise eine Zahl von 1 bis 8 und besonders bevorzugt 1 bis 5 steht, und wobei
R jeweils gleich oder verschieden ist und für Folgendes steht:
- einen Aminrest,
- jeweils gegebenenfalls halogeniertes, vorzugsweise mit Fluor halogeniertes und mehr bevorzugt monohalogeniertes C₁-C₈-Alkyl, vorzugsweise Methyl, Ethyl, Propyl oder Butyl,
- C₁-C₈-Alkoxy, vorzugsweise Methoxy, Ethoxy, Propoxy oder Butoxy,
- jeweils gegebenenfalls durch Alkyl, vorzugsweise C₁-C₄-Alkyl, und/oder Halogen, vorzugsweise Chlor und/oder Brom, substituiertes C₅-C₆-Cycloalkyl,
- jeweils gegebenenfalls durch Alkyl, vorzugsweise C₁-C₄-alkyl, und/oder Halogen, vorzugsweise Chlor oder Brom, und/oder Hydroxyl substituiertes C₆-C₂₀-Aryloxy, vorzugsweise Phenoxy oder Naphthyloxy,
- jeweils gegebenenfalls durch Alkyl, vorzugsweise C₁-C₄-Alkyl, und/oder Halogen, vorzugsweise Chlor und/oder Brom, substituiertes C₇-C₁₂-Aralkyl, vorzugsweise Phenyl-C₁-C₄-alkyl, oder
- einen Halogenrest, vorzugsweise Chlor oder Fluor, oder
- einen OH-Rest; und
eine Kombination davon.

3. Zusammensetzung nach Anspruch 1 oder 2, wobei das phosphorhaltige Flammschutzmittel aus Tributylphosphat, Triphenylphosphat (TPP), Tricresylphosphat, Diphenylcresylphosphat, Diphenyloctylphosphat, Diphenyl-2-ethylcresylphosphat, Tri(isopropylphenyl)phosphat, Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon ausgewählt ist.

4. Zusammensetzung nach einem der Ansprüche 1 bis 3, wobei das Antidrippingmittel aus fluorierten Polyolefinen, Polyvinylidenfluorid, Tetrafluorethylen/Hexafluorpropylen-Copolymer, Ethylen/Tetrafluorethylen-Copolymer und einer Kombination davon ausgewählt ist.

5. Zusammensetzung nach einem der Ansprüche 1 bis 4, bei der Hydrolysestabilisator aus Böhmit, Kaolin, Talk, Citronensäure und einer Kombination davon ausgewählt ist.

6. Zusammensetzung nach einem der Ansprüche 1 bis 5, wobei das Polysilsesquioxan eine durch RSiO_{1,5} dargestellte trifunktionelle Siloxaneinheit aufweist, R aus Wasserstoff, C₁-C₁₂-Alkyl, C₂-C₁₂-Alkenyl, C₁-C₁₂-Alkoxy, C₁-C₁₂-Acyl, C₃-C₈-Cycloalkyl, Hydroxy und Phenyl ausgewählt ist und die Einheit, in 90 Mol-% oder mehr, vorzugsweise in 95 Mol-% oder mehr, mehr bevorzugt in 100 Mol-% der gesamten Siloxaneinheiten enthält.

7. Zusammensetzung nach Anspruch 1, umfassend die folgenden Komponenten, bezogen auf das Gesamtgewicht der Zusammensetzung:
A) zu 50-95 Gew.-% ein aromatisches Polycarbonat, wobei das aromatische Polycarbonat auf Bisphenol A basiert,
B) zu 1-20 Gew.-% ein phosphorhaltiges Flammschutzmittel, wobei das phosphorhaltige Flammschutzmittel aus Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon, vorzugsweise aus Bisphenol-A-bis(diphenylphosphat) (BDP), Resorcinbis(diphenylphosphat), Phenoxyphosphazen und einer Kombination davon ausgewählt ist,
C) zu 0,3-0,7 Gew.-% ein Antidrippingmittel, wobei Polytetrafluorethylen als Antidrippingmittel enthalten ist, mehr bevorzugt das Antidrippingmittel Polytetrafluorethylen ist;
D) zu 0,1-6 Gew.-% einen Hydrolysestabilisator, wobei der Hydrolysestabilisator aus Böhmit, Kaolin, Talk, Citronensäure und einer Kombination davon ausgewählt ist, und
E) zu 1,5-9 Gew.-% ein Polysilsesquioxan, wobei Polymethylsilsesquioxan als Polysilsesquioxan enthalten ist, mehr bevorzugt das Polysilsesquioxan Polymethylsilsesquioxan ist.

8. Zusammensetzung nach Anspruch 1, bestehend aus den folgenden Komponenten, bezogen auf das Gesamtgewicht der Zusammensetzung:
A) zu 60-95 Gew.-% ein aromatisches Polycarbonat, wobei das aromatische Polycarbonat auf Bisphenol A basiert,
B) zu 2-15 Gew.-% ein phosphorhaltiges Flammschutzmittel, wobei das phosphorhaltige Flammschutzmittel aus Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon, vorzugsweise aus Bisphenol-A-bis(diphenylphosphat) (BDP) und Resorcinbis(diphenylphosphat), Phenoxyphosphazen und einer Kombination davon ausgewählt ist,
C) zu 0,4-0,6 Gew.-% ein Antidrippingmittel, wobei Polytetrafluorethylen als Antidrippingmittel enthalten ist, mehr bevorzugt das Antidrippingmittel Polytetrafluorethylen ist;
D) zu 0,2-1 Gew.-% einen Hydrolysestabilisator, wobei Böhmit als Hydrolysestabilisator enthalten ist, mehr bevorzugt der Hydrolysestabilisator Böhmit ist,
E) zu 2-6 Gew.-% ein Polysilsesquioxan, wobei Polymethylsilsesquioxan als Polysilsesquioxan enthalten ist, mehr bevorzugt das Polysilsesquioxan Polymethylsilsesquioxan ist, und
F) zu bis zu 20 Gew.-% ein oder mehrere zusätzliche Additive, die aus Schmiermitteln, Entformungsmitteln, Antioxidanzien, Schlagzähmodifikatoren, UV-Absorbern und einer Kombination davon ausgewählt sind.

9. Zusammensetzung nach Anspruch 1, bestehend aus den folgenden Komponenten, bezogen auf das Gesamtgewicht der Zusammensetzung:
A) zu 60-95 Gew.-% ein aromatisches Polycarbonat, wobei das aromatische Polycarbonat auf Bisphenol A basiert,
B) zu 2-15 Gew.-% ein phosphorhaltiges Flammschutzmittel, wobei das phosphorhaltige Flammschutzmittel aus Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon, vorzugsweise aus Bisphenol-A-bis(diphenylphosphat) (BDP), Resorcinbis(diphenylphosphat), Phenoxyphosphazen und einer Kombination davon ausgewählt ist;
C) zu 0,4-0,6 Gew.-% ein Antidrippingmittel, wobei Polytetrafluorethylen als Antidrippingmittel enthalten ist, mehr bevorzugt das Antidrippingmittel Polytetrafluorethylen ist;
D) zu 0,1-0,5 Gew.-% einen Hydrolysestabilisator, wobei Citronensäure als Hydrolysestabilisator enthalten ist, vorzugsweise der Hydrolysestabilisator Citronensäure ist,
E) zu 2-6 Gew.-% ein Polysilsesquioxan, wobei Polymethylsilsesquioxan als Polysilsesquioxan enthalten ist, mehr bevorzugt das Polysilsesquioxan Polymethylsilsesquioxan ist,
F) zu bis zu 20 Gew.-% ein oder mehrere zusätzliche Additive, die aus Schmiermitteln, Entformungsmitteln, Antioxidanzien, Schlagzähmodifikatoren, UV-Absorbern und einer Kombination davon ausgewählt sind.

10. Zusammensetzung nach Anspruch 1, bestehend aus den folgenden Komponenten, bezogen auf das Gesamtgewicht der Zusammensetzung:
A) zu 60-95 Gew.-% ein aromatisches Polycarbonat, wobei das aromatische Polycarbonat auf Bisphenol A basiert,
B) zu 2-15 Gew.-% ein phosphorhaltiges Flammschutzmittel, wobei das phosphorhaltige Flammschutzmittel aus Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon, vorzugsweise aus Bisphenol-A-bis(diphenylphosphat) (BDP) und Resorcinbis(diphenylphosphat), Phenoxyphosphazen und einer Kombination davon ausgewählt ist;
C) zu 0,4-0,6 Gew.-% ein Antidrippingmittel, wobei Polytetrafluorethylen als Antidrippingmittel enthalten ist, mehr bevorzugt das Antidrippingmittel Polytetrafluorethylen ist;
D) zu 0,5-4 Gew.-% einen Hydrolysestabilisator, wobei Kaolin als Hydrolysestabilisator enthalten ist, vorzugsweise der Hydrolysestabilisator Kaolin ist,
E) zu 2-6 Gew.-% ein Polysilsesquioxan, wobei Polymethylsilsesquioxan als Polysilsesquioxan enthalten ist, mehr bevorzugt das Polysilsesquioxan Polymethylsilsesquioxan ist, und
F) zu bis zu 20 Gew.-% ein oder mehrere zusätzliche Additive, die aus Schmiermitteln, Entformungsmitteln, Antioxidanzien, Schlagzähmodifikatoren, UV-Absorbern und einer Kombination davon ausgewählt sind.

11. Zusammensetzung nach Anspruch 1, bestehend aus den folgenden Komponenten, bezogen auf das Gesamtgewicht der Zusammensetzung:
A) zu 60-95 Gew.-% ein aromatisches Polycarbonat, wobei das aromatische Polycarbonat auf Bisphenol A basiert,
B) zu 2-15 Gew.-% ein phosphorhaltiges Flammschutzmittel, wobei das phosphorhaltige Flammschutzmittel aus Resorcin-verbrückten Oligophosphaten, Bisphenol-A-verbrückten Oligophosphaten, Propoxyphosphazen, Phenoxyphosphazen, Methylphenoxyphosphazen, Aminophosphazen, Fluoralkylphosphazenen und einer Kombination davon, vorzugsweise aus Bisphenol-A-bis(diphenylphosphat) (BDP), Resorcinbis(diphenylphosphat), Phenoxyphosphazen und einer Kombination davon ausgewählt ist;
C) zu 0,4-0,6 Gew.-% ein Antidrippingmittel, wobei Polytetrafluorethylen als Antidrippingmittel enthalten ist, mehr bevorzugt das Antidrippingmittel Polytetrafluorethylen ist;
D) zu 0,8-6 Gew.-% einen Hydrolysestabilisator, wobei Talk als Hydrolysestabilisator enthalten ist, vorzugsweise der Hydrolysestabilisator Talk ist,
E) zu 2-6 Gew.-% ein Polysilsesquioxan, wobei Polymethylsilsesquioxan als Polysilsesquioxan enthalten ist, mehr bevorzugt das Polysilsesquioxan Polymethylsilsesquioxan ist, und
F) zu bis zu 20 Gew.-% ein oder mehrere zusätzliche Additive, die aus Schmiermitteln, Entformungsmitteln, Antioxidanzien, Schlagzähmodifikatoren, UV-Absorbern und einer Kombination davon ausgewählt sind.

12. Zusammensetzung nach einem der Ansprüche 1-11, ferner umfassend einen Schlagzähmodifikator, der aus ABS, MBS, EMA, SAN, ABS-SAN-Copolymeren und einer Kombination davon ausgewählt ist.

13. Formkörper, hergestellt aus der Zusammensetzung nach einem der Ansprüche 1 bis 12.

## Revendications

1. Composition de polycarbonate comprenant les composants suivants, par rapport au poids total de la composition :
A) 50-95 % en poids d'un polycarbonate aromatique ;
B) 1-20 % en poids d'un agent ignifugeant contenant du phosphore ;
C) 0,3-0,7 % en poids d'un agent anti-goutte ;
D) 0,1-6 % en poids d'un stabilisateur d'hydrolyse ; et
E) 1,5-9 % en poids d'un polysilsesquioxane,
le stabilisateur d'hydrolyse étant choisi parmi les argiles minérales, les acides organiques, et une combinaison correspondante.

2. Composition selon la revendication 1, l'agent ignifugeant contenant du phosphore est choisi parmi les composés phosphorés de formule générale (VII) : 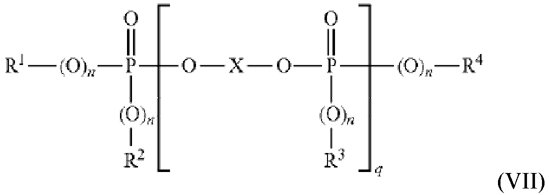 dans laquelle
R¹, R², R³ et R⁴, indépendamment l'un de l'autre, désignent chacun C₁-C₈-alkyle, C₅-C₆-cycloalkyle, C₆-C₂₀-aryle ou C₇-C₁₂-aralkyle chacun éventuellement substitué par alkyle, préférablement substitué par C₁-C₄-alkyle,
n indépendamment les uns des autres, désigne 0 ou 1,
q désigne 0 à 30, et
X représente un résidu aromatique mononucléaire ou polynucléaire ayant 6 à 30 atomes de carbone ou un résidu aliphatique linéaire ou ramifié ayant 2 à 30 atomes de carbone, qui peut être substitué par OH et peut contenir jusqu'à huit liaisons éther ;
des phosphazènes cycliques de formule (IX) : 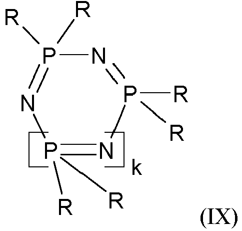
dans laquelle
k est un entier compris de 1 à 10, préférablement de 1 à 8, et particulièrement préférablement 1 à 5
et dans laquelle
R sont en chaque cas identiques ou différents et sont
- un radical amine,
- C₁-C₈-alkyle en chaque cas éventuellement halogéné, préférablement par fluor et plus préférablement monohalogéné, préférablement méthyle, éthyle, propyle ou butyle,
- C₁-C₈-alcoxy, préférablement méthoxy, éthoxy, propoxy ou butoxy,
- C₅-C₆-cycloalkyle en chaque cas éventuellement substitué par alkyle, préférablement C₁-C₄-alkyle, et/ou halogène, préférablement chlore et/ou brome,
- C₆-C₂₀-aryloxy en chaque cas éventuellement substitué par alkyle, préférablement C₁-C₄-alkyle, et/ou halogène, préférablement chlore ou brome, et/ou hydroxyle, préférablement phénoxy ou naphthyloxy,
- C₇-C₁₂-aralkyle en chaque cas éventuellement substitué par alkyle, préférablement C₁-C₄-alkyle, et/ou halogène, préférablement chlore et/ou brome, préférablement phényl-C₁-C₄-alkyl, ou
- un radical halogène, préférablement chlore ou fluor, ou
- un radical OH ; et
une combinaison correspondante.

3. Composition selon la revendication 1 ou 2, dans laquelle l'agent ignifugeant contenant du phosphore est choisi parmi le phosphate de tributyle, le phosphate de triphényle (TPP), le phosphate de tricrésyle, le phosphate de diphénylcrésyle, le phosphate de diphényloctyle, le phosphate de diphényle 2-éthylcrésyle, le tri(isopropylphényl)phosphate, les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes et une combinaison correspondante.

4. Composition selon l'une quelconque des revendications 1 à 3, dans laquelle l'agent anti-goutte est choisi parmi des polyoléfines fluorées, un poly(fluorure de vinylidène), un copolymère de tétrafluoroéthylène/hexafluoropropylène et un copolymère d'éthylène/tétrafluoroéthylène et une combinaison correspondante.

5. Composition selon l'une quelconque des revendications 1 à 4, dans laquelle le stabilisateur d'hydrolyse est choisi parmi une boehmite, un kaolin, un talc, l'acide citrique et une combinaison correspondante.

6. Composition selon l'une quelconque des revendications 1 à 5, dans laquelle le polysilsesquioxane a une unité siloxane trifonctionnelle représentée par RSiO_{1,5}, R est choisi parmi hydrogène, C₁-C₁₂-alkyle, C₂-C₁₂-alcényle, C₁-C₁₂-alcoxy, C₁-C₁₂-acyle, C₃-C₈-cycloalkyle, hydroxy, et phényle et contient l'unité à raison de 90 % en moles ou plus, préférablement à raison de 95 % en moles ou plus, plus préférablement à raison de 100 % en moles des unités de siloxane totales.

7. Composition selon la revendication 1, comprenant les composants suivants, par rapport au poids total de la composition :
A) 50-95 % en poids d'un polycarbonate aromatique, le polycarbonate aromatique étant à base de bisphénol A,
B) 1-20 % en poids d'un agent ignifugeant contenant du phosphore, l'agent ignifugeant contenant du phosphore étant choisi parmi les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes, et une combinaison correspondante, préférablement parmi le bis(diphénylephosphate) de bisphénol A (BDP), le résorcinol bis(diphénylphosphate) de résorcinol, le phénoxyphosphazène, et une combinaison correspondante,
C) 0,3-0,7 % en poids d'un agent anti-goutte, le polytétrafluoroéthylène étant contenu en tant qu'agent anti-goutte, plus préférablement l'agent anti-goutte étant du polytétrafluoréthylène ;
D) 0,1-6 % en poids d'un stabilisateur d'hydrolyse, le stabilisateur d'hydrolyse étant choisi parmi une boehmite, un kaolin, un talc, l'acide citrique et une combinaison correspondante, et
E) 1,5-9 % en poids d'un polysilsesquioxane, le polyméthylsilsesquioxane étant contenu comme polysilsesquioxane, plus préférablement le polysilsesquioxane est un polyméthylsilsesquioxane.

8. Composition selon la revendication 1, constituée des composants suivants, par rapport au poids total de la composition :
A) 60-95 % en poids d'un polycarbonate aromatique, le polycarbonate aromatique étant à base de bisphénol A,
B) 2-15 % en poids d'un agent ignifugeant contenant du phosphore, l'agent ignifugeant contenant du phosphore étant choisi parmi les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes, et une combinaison correspondante, préférablement parmi le bis(diphénylephosphate) de bisphénol A (BDP), le résorcinol bis(diphénylphosphate) de résorcinol, le phénoxyphosphazène, et une combinaison correspondante,
C) 0,4-0,6 % en poids d'un agent anti-goutte, le polytétrafluoroéthylène étant contenu en tant qu'agent anti-goutte, plus préférablement l'agent anti-goutte étant du polytétrafluoréthylène ;
D) 0,2-1 % en poids d'un stabilisateur d'hydrolyse, la boehmite étant contenue en tant que stabilisateur d'hydrolyse, plus préférablement le stabilisateur d'hydrolyse étant la boehmite,
E) 2-6 % en poids d'un polysilsesquioxane, le polyméthylsilsesquioxane étant contenu comme polysilsesquioxane, plus préférablement le polysilsesquioxane est un polyméthylsilsesquioxane, et
F) jusqu'à 20 % en poids d'un ou plusieurs additifs supplémentaires choisis parmi les lubrifiants, les agents de démoulage, les antioxydants, les modificateurs de résistance aux chocs, les absorbeurs d'UV, et une combinaison correspondante.

9. Composition selon la revendication 1, constituée des composants suivants, par rapport au poids total de la composition :
A) 60-95 % en poids d'un polycarbonate aromatique, le polycarbonate aromatique étant à base de bisphénol A,
B) 2-15 % en poids d'un agent ignifugeant contenant du phosphore, l'agent ignifugeant contenant du phosphore étant choisi parmi les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes, et une combinaison correspondante, préférablement parmi le bis(diphénylephosphate) de bisphénol A (BDP), le résorcinol bis(diphénylphosphate) de résorcinol, le phénoxyphosphazène, et une combinaison correspondante ;
C) 0,4-0,6 % en poids d'un agent anti-goutte, le polytétrafluoroéthylène étant contenu en tant qu'agent anti-goutte, plus préférablement l'agent anti-goutte étant du polytétrafluoréthylène ;
D) 0,1-0,5 % en poids d'un stabilisateur d'hydrolyse, l'acide citrique étant contenu en tant que stabilisateur d'hydrolyse, préférablement le stabilisateur d'hydrolyse étant l'acide citrique,
E) 2-6 % en poids d'un polysilsesquioxane, le polyméthylsilsesquioxane étant contenu comme polysilsesquioxane, plus préférablement le polysilsesquioxane est un polyméthylsilsesquioxane,
F) jusqu'à 20 % en poids d'un ou plusieurs additifs supplémentaires choisis parmi les lubrifiants, les agents de démoulage, les antioxydants, les modificateurs de résistance aux chocs, les absorbeurs d'UV, et une combinaison correspondante.

10. Composition selon la revendication 1, constituée des composants suivants, par rapport au poids total de la composition :
A) 60-95 % en poids d'un polycarbonate aromatique, le polycarbonate aromatique étant à base de bisphénol A,
B) 2-15 % en poids d'un agent ignifugeant contenant du phosphore, l'agent ignifugeant contenant du phosphore étant choisi parmi les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes, et une combinaison correspondante, préférablement parmi le bis(diphénylephosphate) de bisphénol A (BDP), le résorcinol bis(diphénylphosphate) de résorcinol, le phénoxyphosphazène, et une combinaison correspondante ;
C) 0,4-0,6 % en poids d'un agent anti-goutte, le polytétrafluoroéthylène étant contenu en tant qu'agent anti-goutte, plus préférablement l'agent anti-goutte étant du polytétrafluoréthylène ;
D) 0,5-4 % en poids d'un stabilisateur d'hydrolyse, le kaolin étant contenu en tant que stabilisateur d'hydrolyse, de préférence le stabilisateur d'hydrolyse étant le kaolin,
E) 2-6 % en poids d'un polysilsesquioxane, le polyméthylsilsesquioxane étant contenu comme polysilsesquioxane, plus préférablement le polysilsesquioxane est un polyméthylsilsesquioxane, et
F) jusqu'à 20 % en poids d'un ou plusieurs additifs supplémentaires choisis parmi les lubrifiants, les agents de démoulage, les antioxydants, les modificateurs de résistance aux chocs, les absorbeurs d'UV, et une combinaison correspondante.

11. Composition selon la revendication 1, constituée des composants suivants, par rapport au poids total de la composition :
A) 60-95 % en poids d'un polycarbonate aromatique, le polycarbonate aromatique étant à base de bisphénol A,
B) 2-15 % en poids d'un agent ignifugeant contenant du phosphore, l'agent ignifugeant contenant du phosphore étant choisi parmi les oligophosphates pontés par résorcinol, les oligophosphates pontés par bisphénol A, le propoxyphosphazène, le phénoxyphosphazène, le méthylphénoxyphosphazène, l'aminophosphazène, les fluoroalkylphosphazènes, et une combinaison correspondante, préférablement parmi le bis(diphénylephosphate) de bisphénol A (BDP), le résorcinol bis(diphénylphosphate) de résorcinol, le phénoxyphosphazène, et une combinaison correspondante ;
C) 0,4-0,6 % en poids d'un agent anti-goutte, le polytétrafluoroéthylène étant contenu en tant qu'agent anti-goutte, plus préférablement l'agent anti-goutte étant du polytétrafluoréthylène ;
D) 0,8-6 % en poids d'un stabilisateur d'hydrolyse, le talc étant contenu en tant que stabilisateur d'hydrolyse, préférablement le stabilisateur d'hydrolyse étant le talc,
E) 2-6 % en poids d'un polysilsesquioxane, le polyméthylsilsesquioxane étant contenu comme polysilsesquioxane, plus préférablement le polysilsesquioxane est un polyméthylsilsesquioxane, et
F) jusqu'à 20 % en poids d'un ou plusieurs additifs supplémentaires choisis parmi les lubrifiants, les agents de démoulage, les antioxydants, les modificateurs de résistance aux chocs, les absorbeurs d'UV, et une combinaison correspondante.

12. Composition selon l'une quelconque des revendications 1 à 11, comprenant en outre des modificateurs de résistance aux chocs choisis parmi des copolymères ABS, MBS, EMA, SAN, ABS-SAN, et une combinaison correspondante.

13. Article façonné fabriqué à partir de la composition selon l'une quelconque des revendications 1 à 12.
